# EUROPÄISCHE PATENTSCHRIFT

(11) **EP 4 558 961 B1**
(45) Veröffentlichungstag und Bekanntmachung des Hinweises auf die Patenterteilung: **01.04.2026**
(21) Anmeldenummer: 23737878.1
(22) Anmeldetag: 13.06.2023
(51) Int. Cl.: G06T 7/80

(54) **SELBSTKALIBRIERENDES KAMERASYSTEM, FAHRZEUG UND VERFAHREN**
SELF CALIBRATING CAMERA SYSTEM, VEHICLE AND METHOD
SYSTÈME DE CAMÉRA À ÉTALONNAGE AUTOMATIQUE, VÉHICULE ET MÉTHODE

(30) Priorität: 20.07.2022 DE 102022207415; 07.12.2022 DE 102022213225
(43) Veröffentlichungstag der Anmeldung: 28.05.2025
(73) Patentinhaber: AUMOVIO Germany GmbH, 60488 Frankfurt am Main (DE)
(72) Erfinder: SMITS, Thomas, 30175 Hannover (DE)
(74) Vertreter: Aumovio Corporation
(86) Internationale Anmeldenummer: PCT/DE2023/200118
(87) Internationale Veröffentlichungsnummer: WO 2024/017444

(56) Entgegenhaltungen:
- US-A1- 2016 012 588
- US-A1- 2016 284 087

## Beschreibung

Die Erfindung betrifft ein Kamerasystem für ein Fahrzeug, ein Fahrzeug, das ein Kamerasystem aufweist, sowie ein Verfahren zum Betreiben eines Kamerasystems.

Kamerasysteme werden in Fahrzeugen bereitgestellt, um einem Fahrer eine Einsicht in zumindest einen vorbestimmten Kamerasichtbereich zu gewähren. Um dies zu ermöglichen, können Kameraeinheiten an vorgegebenen Lagen an dem Fahrzeug angeordnet sein. Ein Kamerabild des jeweiligen Kamerasichtbereichs kann dabei auf einem Bildschirm in dem Fahrzeug wiedergegeben werden. Die Kamerasysteme können beispielsweise als Spiegelersatzsystem ausgebildet sein oder als Rundumsicht- Kamerasystem, welches eine Sicht um das Fahrzeug herum ermöglicht, oder eine Betrachtung des Fahrzeugs von oben.

Insbesondere bei Lastwagen und/oder Anhängersystemen ist es verbreitet, festinstallierte Kameraeinheiten an vorgegebenen Stellen anzuordnen, um einen Fahrer bei einem Manövrieren des Fahrzeugs zu unterstützen.

Um ein flexibles Anordnen von Kamerasystemen zu ermöglichen, existieren nach dem Stand der Technik mobile Kameraeinheit, welche durch den Fahrer an festgelegten oder frei wählbaren Positionen an dem Fahrzeug angeordnet werden können. Dem Fahrer ist es dadurch ermöglicht, in bestimmten Situationen eine Kameraeinheit an dem Fahrzeug anzuordnen um eine Kameraaufnahme eines Kamerasichtbereichs bereitzustellen.

Insbesondere bei mobilen Kamerasystemen ergibt sich die Problematik, dass genaue Koordinaten der einzelnen Kameraeinheiten bekannt sein müssten, um ein Zusammenführen der Kameraaufnahmen der jeweiligen Kamerasichtbereiche zu einer Gesamtaufnahme eines Gesamtsichtbereiches zu ermöglichen. Im Gegensatz zu fest installierten Kamerasystemen ist es hierbei nicht möglich, das Kamerasystem vorab zu kalibrieren. Das Kamerasystem muss somit in jedem Betrieb neu kalibriert werden. Nach dem Stand der Technik ist dies jedoch nicht in einem angemessenen Zeitraum möglich.

Kamerasysteme, insbesondere Surround View Systeme sind bei heutigen PKW sehr verbreitet und gehören teilweise schon zur Standardausstattung. Bei Nutzfahrzeugen steigt die Verbreitung ebenso. Allerdings stehen der weiteren Verbreitung in diesem Fahrzeugsegment diverse Schwierigkeiten/Herausforderungen im Wege. Dazu gehören relativ hohe Kosten aufgrund geringer Fahrzeugstückzahlen, konstruktiver Eigenschaften der Fahrzeuge und damit die Erschließung des gesamten Sicht-Umfeldes. Anbaugeräte und Anhänger, die beweglich mit dem Zugfahrzeug verbunden sind erfordern, dass Sichtfelder nachgeführt werden müssen. Lange Kabelverbindungen zu beweglichen Anbaugeräten oder langen Anhängern, insbesondere bei landwirtschaftlichen Maschinen mit zum Teil zwei hintereinander gekoppelten Anhängern, sind unerwünscht. Häufig wechselnde Anbaugeräte beziehungsweise Anhänger können nicht alle mit hochpreisiger fester Installation ausgerüstet werden

Darüber hinaus gehören diese Anbaugeräte oder sich wechselnde Anhänger im Zweifel nicht dem Fahrzeugbesitzer, sodass hier keine eigene feste Installation an Fremdgeräten durchgeführt werden kann.

Darüber hinaus müssen fest installierte Systeme aufwendig kalibriert werden. Ein mobiles Surround View System ist bisher auf dem Markt nicht verfügbar, weil temporär an Fahrzeuge mittels Saugnäpfen oder Magneten angeheftete Kameraeinheiten arbiträre Positionen beziehungsweise Ausrichtungen zum Fahrzeug selbst besitzen. Für ein Surround View System müssen darüber hinaus alle Kameraeinheiten untereinander kalibriert sein. Abweichungen durch nicht deterministische Einzelausrichtungen der Kameraeinheiten addieren sich beim Betrieb im Kamera-Verbund beim Stitching der Sichtfelder.

Aus US 2016/284087 A1 ist ein kamerabasiertes Fahrerassistenzsystem bekannt, das eine Vielzahl von Kameras, die jeweils eine elektrooptische Komponente zum Aufnehmen von Bildern umfassen, aufweist, wobei sich die Kameras an verschiedenen Stellen eines Fahrzeugs befinden, in dem das kamerabasierte Fahrerassistenzsystem untergebracht ist. Es sind ein Merkmalspunktanalysator zum Bestimmen eines ersten Einschränkungssatzes für die Vielzahl von Kameras basierend auf einer Vielzahl von Merkmalspunkten in einer Bodenebene in der Nähe des Fahrzeugs und ein Grenzanalysator, um für die Vielzahl von Kameras einen zweiten Einschränkungssatz basierend auf einer oder mehrerer Grenzen des Fahrzeugs zu bestimmen, vorgesehen. Ein Kalibrator dient zum Durchführen einer automatischen Kalibrierung einer oder mehrerer der Vielzahl von Kameras basierend auf dem ersten Einschränkungssatz und dem zweiten Einschränkungssatz. Mittels eines Displays kann ein Ergebnis der automatischen Kalibrierung ausgegeben werden.

Ferner ist aus US 2016/012588 A1 ein Verfahren zum Kalibrieren einer oder mehrerer Kameras bekannt, wobei die eine oder mehreren Kameras Bilder einer Szene aus verschiedenen Blickwinkeln erfassen und wobei sich die Bilder nicht überlappen. Das Verfahren umfasst die Schritte: Erstellen eines 3D-Modells der Szene mithilfe einer Kalibrierungskamera, die von den einer oder mehreren Kameras unabhängig ist, und eines Ablaufs zur gleichzeitigen Lokalisierung und Kartierung; Bestimmen von 2D-zu-3D-Entsprechungen zwischen jedem der Bilder und dem 3D-Modell; und Schätzen von Kalibrierungsparametern jeder der einen oder mehreren Kameras unter Verwendung eines 2D-zu-3D-Registrierungsverfahrens, wobei die Schritte in einem Prozessor ausgeführt werden.

Es ist eine Aufgabe der Erfindung, für das beschriebene Fahrzeugsegment ein mobiles, sich selbst kalibrierendes Kamerasystem bereitzustellen.

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung sowie die Figuren offenbart.

Die Erfindung betrifft ein Kamerasystem für ein Fahrzeug, umfassend zumindest eine Recheneinheit, die zumindest einen Prozessor aufweist. Das Kamerasystem umfasst zumindest eine mobile Kameraeinheit. Mit anderen Worten handelt es sich bei der Erfindung um das Kamerasystem, das dazu eingerichtet ist, eine Umgebung des Fahrzeugs durch zumindest eine mobile Kameraeinheit zu erfassen. Die zumindest eine mobile Kameraeinheit ist dabei zur Anordnung an einer jeweiligen Bordwand des Fahrzeugs eingerichtet. Die zumindest eine mobile Kameraeinheit ist dazu eingerichtet, einen jeweiligen Kamerasichtbereich zu erfassen. Der Kamerasichtbereich kann insbesondere einen Öffnungswinkel größer als 180° aufweisen. Die zumindest eine mobile Kameraeinheit ist dabei nicht fest an dem Fahrzeug angeordnet. Die zumindest eine mobile Kameraeinheit kann beispielsweise je nach Bedarf an einer vorbestimmten Halterung angeordnet werden oder beliebig an einer Bordwand des Fahrzeugs befestigt werden. Die Lage der zumindest einen mobilen Kameraeinheit an dem Fahrzeug kann somit in den jeweiligen Betriebszeiten unterschiedlich sein. Dadurch ist es, im Gegensatz zu fest an dem Fahrzeug angeordneten Kameraeinheiten nicht möglich, die Lage der zumindest einen mobilen Kameraeinheit in dem Kamerasystem vorab zu speichern, oder das Kamerasystem zur Verwendung der zumindest einen mobilen Kameraeinheit ab Werk zu kalibrieren.

Das Kamerasystem ist dazu eingerichtet in dem Kamerasichtbereich der zumindest einen mobilen Kameraeinheit geometrische Parameter der jeweiligen Bordwand zu erfassen. Mit anderen Worten ist es vorgesehen, dass die Kameraeinheit dazu eingerichtet ist in ihrem Kamerasichtbereich die Bordwand, an welcher diese befestigt ist, zu erfassen. Das Kamerasystem ist dazu eingerichtet in dem Kamerasichtbereich der Kameraeinheit geometrische Parameter der jeweiligen Bordwand zu erfassen. Die geometrischen Parameter können beispielsweise Kanten und/oder, Ecken Punkte oder Flächen der jeweiligen Bordwand und/oder des Fahrzeugs betreffen. Die geometrischen Parameter können beispielsweise Längen, Lagen, Positionen, Winkel oder Flächeninhalte beschreiben. Das Kamerasystems ist dazu eingerichtet eine Orientierung der zumindest einen mobilen Kameraeinheit in einem vorgegebenen Fahrzeugkoordinatensystem zu erfassen. Die Orientierung kann beispielsweise eine Ausrichtung der zumindest einen mobilen Kameraeinheit in Bezug auf das Fahrzeug beschreiben und beispielsweise eine Art der Bordwand angeben, an welcher diese angeordnet ist. Die Art der Bordwand kann beispielsweise eine Seitenbordwand oder eine Hinterbordwand des Fahrzeugs beschreiben. Die Orientierung kann beispielsweise eine grundsätzliche Richtung, wie beispielsweise nach vorne, nach hinten, nach rechts, nach links, nach oben oder nach unten in Bezug auf das Fahrzeug beschreiben, ohne eine exakte Ausrichtung vorzugeben. Das Kamerasystems ist dazu eingerichtet, in Abhängigkeit von den geometrischen Parametern der jeweiligen Bordwand und der Orientierung der zumindest einen mobilen Kameraeinheit in dem vorgegebenen Fahrzeugkoordinatensystem ein lokales geometrisches Modell des Fahrzeugs der zumindest einen mobilen Kameraeinheit zu generieren. Das lokale geometrische Modell des Fahrzeugs kann sich auf eine Umgebung der mobilen Kameraeinheit beziehen und beispielsweise die jeweiligen Bordwand und/oder eine Lage der jeweiligen zumindest einen mobilen Kameraeinheit in der jeweiligen Bordwand beschreiben. Es kann vorgesehen sein, dass das lokale geometrische Modell Abmessungen der jeweiligen Bordwand umfasst, welche durch das Kamerasystem basierend auf den geometrischen Parametern ermittelt wurden. Es kann, vorgesehen sein, dass das lokale geometrische Modell eine linke Seitenwand beschreibt. Das lokale geometrische Modell kann beispielsweise Abmessungen zwischen den jeweiligen Kanten der Seitenwand umfassen. Das lokale geometrische Modell kann auch umfassen, an welcher Position sich die mobile Kameraeinheit innerhalb der Seitenwand befindet. Die Position der mobilen Kameraeinheit innerhalb der Seitenwand kann beispielsweise durch Distanzen zu Seitenkanten der Bordwand beschrieben sein. Die Position der mobilen Kameraeinheit kann auch eine Verdrehung der mobilen Kameraeinheit in Bezug auf die Kanten beschreiben. Ein mögliches Verfahren zur Eigenlokalisierung einer der Kameraeinheiten ist beispielsweise in der DE10 2019 202 269 A1 offenbart.

Es ist vorgesehen, dass in dem Kamerasystem ein vorgegebenes globales geometrisches a-priori Modell des Fahrzeugs gespeichert ist. Das vorgegebene globale geometrische a-priori Modell beschreibt Annahmen in Bezug auf die geometrischen Parameter des Fahrzeugs. Es kann vorgesehen sein, dass durch das globale geometrische a-priori Modell eine Annahme vorgegeben ist, dass es sich bei dem Fahrzeug um einen Lastwagen handelt, welcher eine quadratische Form aufweist. In diesem Fall kann angenommen werden, dass die Bordwände orthogonal zueinander ausgerichtete Normalenvektoren zueinander aufweisen und gegenüberliegende Bordwände identische Abmessungen der Kanten oder anderer der geometrischen Parameter aufweisen.

Das Kamerasystem ist dazu eingerichtet, das vorgegebene globale geometrische a-priori Modell des Fahrzeugs mit dem lokalen geometrischen Modell des Fahrzeugs der zumindest einen mobilen Kameraeinheit und zumindest einem weiteren lokalen geometrischen Modell des Fahrzeugs zu einem globalen Modell des Fahrzeugs zusammenzuführen. Mit anderen Worten ist es vorgesehen, dass das vorgegebene geometrische a-priori Modell des Fahrzeugs die Annahmen der geometrischen Parameter vorgibt. Diese können als Randbedingungen fest vorgegeben sein oder in Abhängigkeit erfasste geometrische Parameter angepasst werden.

Um das globale Modell des Fahrzeugs ermitteln zu können, ist das Kamerasystem dazu eingerichtet die lokalen geometrischen Modelle des Fahrzeugs basierend auf den durch das a-priori Modell vorgegebenen Annahmen zu fusionieren. Das durch die zumindest eine mobile Kameraeinheit generierte lokale geometrischen Modell wird dabei mit zumindest einem weiteren lokalen geometrischen Modell kombiniert. Bei dem zumindest einem weiteren lokalen geometrischen Modell kann es sich beispielsweise um einen, für eine weitere mobile Kameraeinheit des Kamerasystems ermitteltes lokales geometrisches Modell handeln oder um ein für eine feste Kameraeinheit des Fahrzeugs ermitteltes lokales geometrisches Modell. Das geometrische a-priori Modell kann beispielsweise in der Recheneinheit des Kamerasystems gespeichert sein. Es kann auch vorgesehen sein, dass das geometrische a-priori Modell durch die Recheneinheit aus einer Fahrzeugsteuereinrichtung des Fahrzeugs oder einem in dem Fahrzeug festinstalliertes Kamerasystem ausgelesen werden kann.

Das Kamerasystem ist dazu eingerichtet, eine Lage der zumindest einen mobilen Kameraeinheit in dem globalen geometrischen Modell des Fahrzeugs zu ermitteln. Mit anderen Worten ist es aufgrund der Kombination der lokalen geometrischen Modelle gemäß der Annahmen des a-priori Modells möglich, aus einer in einem lokalen geometrischen Modell des Fahrzeugs ermittelten Lage, die globale Lage der Kameraeinheit in dem globalen Modell des Fahrzeugs zu ermitteln. Es kann vorgesehen sein, dass geometrische Parameter der jeweiligen Bordwand, an welcher die zumindest eine mobile Kameraeinheit angeordnet ist, durch das lokale geometrische Modell der Kameraeinheit bekannt sind. In dem lokalen geometrischen Modell kann auch die Lage der Kameraeinheit bekannt sein. Durch die Berücksichtigung des globalen geometrischen a-priori Modells des Fahrzeugs kann daraus ermittelt werden, welche Lage die Kameraeinheit in Bezug auf das Gesamtfahrzeug aufweist.

Durch die Ermittlung der Lage der zumindest einen mobilen Kameraeinheit in dem globalen geometrischen Modell des Fahrzeugs ist es möglich, das Kamerasystem zur Zusammenführung von Aufnahmen der jeweiligen Kameraeinheit zu kalibrieren. Durch die bekannte Lage der zumindest einen mobilen Kameraeinheit in dem globalen geometrischen Modell des Fahrzeugs kann durch das Kamerasystem ermittelt werden, welcher Kamerasichtbereich der Kameraeinheit in Bezug auf das Fahrzeug erfasst werden kann. Dies ermöglicht es, den Kamerasichtbereich der zumindest einen mobilen Kameraeinheit mit weiteren Kamerasichtbereichen jeweiliger Kameraeinheiten zu kombinieren.

Das vorgestellte Kamerasystem ermöglicht es, mobile drahtlose Kameraeinheiten im Verbund als Surround View System zu betreiben. Dabei werden keine aufwendigen und zeitintensiven Kalibrierungen durch den Benutzer benötigt. Der Nutzer kann die Kameraeinheiten adhoc an verschiedene Fahrzeugseiten anheften und dann den gewünschten Sichtbereich kameraübergreifend als zusammenhängenden Bereich einsehen können. Durch die Verwendung von mobilen drahtlosen Kameraeinheiten werden die in der Einleitung beschriebenen Probleme gelöst und die vorgestellte Anwendung überhaupt erst ermöglicht.

Unter der Recheneinheit des Kamerasystems kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere digitale Signalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phasechange random access memory"), ausgestaltet sein.

Die Erfindung umfasst auch Weiterbildungen, durch die sich weitere Vorteile ergeben.

Eine Weiterbildung der Erfindung sieht vor, dass das Kamerasystem zumindest zwei der Kameraeinheiten umfasst und das Kamerasystem dazu eingerichtet ist, jeweilige Erfassungsdaten der zumindest zwei Kameraeinheiten und/oder geometrische Parameter der zumindest zwei Kameraeinheiten zu plausibilisieren. Es kann vorgesehen sein, dass durch die zumindest zwei Kameraeinheiten jeweilige Erfassungsdaten generiert werden, welche den Kamerasichtbereich der jeweiligen Kameraeinheit beschreiben. Bei den Erfassungsdaten kann es sich beispielsweise um Bilddaten eines Kamerabildes handeln. Basierend auf den jeweiligen Erfassungsdaten können die jeweiligen geometrischen Parameter und/oder die jeweiligen lokalen Modelle der Kameraeinheiten ermittelt werden. Die Erfassungsdaten und/oder die geometrischen Parameter können jedoch aufgrund von Meßungenauigkeiten Schwankungen aufweisen. Es kann beispielsweise der Fall vorliegen, dass eine Kante der jeweiligen Bordwand nicht vollständig erfasst wurde und somit die geometrischen Parameter in Bezug auf die Kante und vollständig sind. Es kann auch vorkommen, dass die Position einer der zumindest zwei Kameraeinheiten nicht ermittelt werden konnte, weil nur ein bestimmter Abschnitt der Bordwand erkannt wurde. Unter Berücksichtigung des a-priori Modells können die jeweiligen Erfassungsdaten der zumindest zwei Kameraeinheiten und/oder die geometrischen Parameter zusammengeführt und/oder plausibilisiert werden. Es kann beispielsweise durch das vorgegebene globale geometrische a-priori Modell des Fahrzeugs angenommen sein, dass gegenüberliegende Bordwände identische Abmessungen aufweisen und somit zumindest einige der geometrischen Parameter der gegenüberliegenden Bordwände identisch sind. Im Rahmen des Erfassungsvorgangs können dabei Erfassungsdaten zwischen den zwei Kameraeinheiten ausgetauscht werden und/oder Abweichungen zwischen geometrischen Parametern der zumindest zwei Kameraeinheiten ermittelt werden. Dabei können fehlende geometrische Parameter eines der lokalen Modelle durch geometrische Parameter eines lokalen Modells einer anderen Kameraeinheit ergänzt werden.

Eine Weiterbildung der Erfindung sieht vor, dass das Kamerasystem dazu eingerichtet ist, die geometrischen Parameter der jeweiligen Bordwand in dem Kamerasichtbereich der Kameraeinheit nach einem statischen Detektionsverfahren zu erfassen. Das statische Detektionsverfahren kann beispielsweise eine Ermittlung der Fahrzeugkanten oder/der Fahrzeugfläche der Bordwand basierend auf einem statischen, von der Kameraeinheit aufgenommenen Bild vorsehen. Es kann vorgesehen sein, dass Kanten in dem Bild des Kamerasichtbereichs mittels Kantenerkennungsalgorithmen detektiert werden. Das statische Detektionsverfahren kann beispielsweise Kanten basierend auf Kontrastunterschieden erfassen.

Eine Weiterbildung der Erfindung sieht vor, dass das Kamerasystem dazu eingerichtet ist, die geometrischen Parameter der jeweiligen Bordwand in dem Kamerasichtbereich der Kameraeinheit nach einem dynamischen Detektionsverfahren zu erfassen. Es ist vorgesehen, dass das dynamische Detektionsverfahren ein Erfassen eines optischen Flusses umfasst. Es kann vorgesehen sein, dass das Kamerasystem dazu eingerichtet ist, statische und dynamische Bereiche in dem Kamerasichtbereich durch einen Vergleich von zumindest zwei Kamerabildern der Kameraeinheit zu identifizieren. Der statische Bereich kann dabei keine Bewegungsbedingten Änderungen umfassen. Der dynamische Bereich kann Bildbereiche betreffen, welche sich zwischen den zumindest zwei Kamerabildern aufgrund einer Bewegung des Fahrzeugs geändert haben. Bei dem statischen Bereich kann es sich beispielsweise um die Bordwand handeln, während der dynamische Bereich eine sich während einer Bewegung des Fahrzeugs veränderte Umgebung in dem Kamerabild beschreiben kann. Beispielsweise können basierend auf Grenzen zwischen dynamischen und statischen Bereichen können ein Kantenverlauf oder weitere der geometrischen Parameter der jeweiligen Bordwand ermittelt werden.

Eine Weiterbildung der Erfindung sieht vor, dass das Kamerasystem dazu eingerichtet ist, die Orientierung der zumindest einen Kameraeinheit in dem globalen Modell in Abhängigkeit eines optischen Flussverlaufs zu ermitteln. Mit anderen Worten ist das Kamerasystem dazu eingerichtet, den während des dynamischen Detektionsverfahren erfassten optischen Flussverlauf zur auszuwerten und aus dem Flussverlauf, welcher für die jeweilige Kameraeinheit die Ausrichtung der Kameraeinheit in dem globalen Modell zu ermitteln. Es kann beispielsweise vorgesehen sein, dass während einer Bewegung des Fahrzeugs für die zumindest eine Kameraeinheit, mittels eines Trackings von Punkten oder Merkmalen zwischen zwei Bildern der jeweiligen Kameraeinheit der jeweilige Flussverlauf aus den Verläufen jeweiliger Bewegungen der Punkte ermittelt wird. In Abhängigkeit von dem Flussverlauf kann ermittelt werden, ob sich die Kameraeinheit auf einer rechten, linken, vorderen, hinteren, oberen oder unteren Bordwand des Fahrzeugs befindet.

Eine Weiterbildung der Erfindung sieht vor, dass die zumindest eine Kameraeinheit einen Beschleunigungssensor umfasst, der dazu eingerichtet ist, eine Gravitationsrichtung in Bezug auf die zumindest eine Kameraeinheit zu ermitteln. Das Kamerasystem ist dazu eingerichtet, aus der zumindest einen Gravitationsrichtung eine Lage des globalen Kamerasystems in Bezug auf eine Umgebung zu ermitteln. Mit anderen Worten kann durch den Beschleunigungssensor ein Winkel ermittelt, werden, um welchen die Kamera in Bezug auf die in Richtung des Erdmittelpunktes ausgerichtete Gravitationsrichtung geneigt ist. Dadurch kann beispielsweise zumindest eine Rotation der Kameraeinheit ermittelt werden.

Aus der ermittelten Ausrichtung der zumindest einen Kameraeinheit in Bezug auf die Gravitationsrichtung kann ermittelt werden, welche Lage das globale Kameramodell in Bezug auf die Umgebung aufweist. Es kann beispielsweise vorgesehen sein, dass durch eine an einer Seitenbordwand angeordnete Kameraeinheit eine Drehung um eine normal zu Bordwand ausgerichtete Rotationsachse durch den Beschleunigungssensor erfasst ist. Gleichzeitig kann durch eine an einer Hinterbordwand angeordnete Kameraeinheit eine Rotation um eine in der Hinterbordwand liegende Rotationsachse um einen gleichen Winkel ermittelt werden. Aus den Rotationsachsen kann durch das Kamerasystem eine Rotation des globalen Fahrzeugmodells um die Umgebung ermittelt werden. Es kann beispielsweise eine Neigung des Fahrzeugs um einen Winkel einer Steigung ermittelt werden, auf der sich das Fahrzeug befindet. Es kann auch ein Winkel aufgrund einer ungleichen Beladung des Fahrzeugs ermittelt werden. Eine Neigung des Fahrzeugs aufgrund eines Beschleunigungsvorgangs kann ebenfalls ermittelt werden und zum Ausgleich dieser Neigung in einem Gesamtbild oder einem Kamerabild verwendet werden.

Eine Weiterbildung der Erfindung sieht vor, dass das Kamerasystem dazu eingerichtet ist, die Orientierung der zumindest einen Kameraeinheit in dem globalen Modell in Abhängigkeit einer zeitlichen Anordnungsreihenfolge der Kameraeinheiten an dem Fahrzeug zu ermitteln. Mit anderen Worten ist in dem Kamerasystem zumindest eine vorgegebene Anordnungsreihenfolge zur Anordnung der Kameraeinheiten gespeichert. Die Reihenfolge kann sich auf eine zeitliche Reihenfolge beziehen, in welcher die Kameraeinheiten im Fahrzeug bevorzugt angeordnet werden müssen, damit aus einer zeitlichen Abfolge der Anordnung der jeweiligen Kameraeinheit die jeweilige Orientierung zugeordnet werden kann. Mit anderen Worten kann die Reihenfolge der Anordnung mit der Orientierung der jeweiligen Kameraeinheiten verbunden sein. Es kann beispielsweise vorgesehen sein, dass die Anordnungsreihenfolge vorgibt, dass zuerst eine erste Kameraeinheit an einer linken Bordwand des Fahrzeug anzuordnen ist, dann eine zweite Kameraeinheit an einer Hinterbordwand des Fahrzeugs und dann eine dritte Kameraeinheit an einer rechten Bordwand des Fahrzeugs. Die Kameraeinheiten können dabei identisch sein. Das Kamerasystem kann dazu eingerichtet sein, jeweilige Zeitpunkte der Anbringung der jeweiligen Kameraeinheiten zu erfassen und den Kameraeinheiten in Abhängigkeit der zeitlichen Anordnungsreihenfolge die jeweilige Orientierung zuzuweisen. In dem besagten Fall kann der ersten Kameraeinheit die Ausrichtung links zugewiesen sein, der zweiten Kameraeinheit die Orientierung hinten und der dritten Kameraeinheit die Orientierung rechts.

Eine Weiterbildung der Erfindung sieht vor, dass das Kamerasystem zumindest eine fest an dem Fahrzeug angeordnete Kameraeinheit aufweist. Mit anderen Worten kann es vorgesehen sein, das zumindest eine der Kameraeinheiten an einer vorgegebenen Lage des Fahrzeugs fest angeordnet ist. Es kann vorgesehen sein, dass das lokale Umgebungsmodell für die zumindest eine fest an dem Fahrzeug angeordnete Kameraeinheit in dem Kamerasystem gespeichert ist.

Eine Weiterbildung der Erfindung sieht vor, dass das Kamerasystem dazu eingerichtet ist, eine Anordnung der zumindest einen Kameraeinheit durch eine Erfassung einer vorbestimmten Bewegung der zumindest einen Kameraeinheit zu erfassen. Es kann, vorgesehen sein, dass das Kamerasystem dazu eingerichtet ist, durch den Beschleunigungssensor der zumindest einen Kameraeinheit die Bewegungen der Kameraeinheit zu erfassen. Das Kamerasystem kann dazu eingerichtet sein, vorbestimmte Bewegungen, welche vorbestimmte Merkmale umfassen und einem Anordnungsvorgang der mobilen Kameraeinheit an dem Fahrzeug zugewiesen sind, zu erfassen und diese als Anordnung der Kameraeinheit an dem Fahrzeug zu detektieren. Das Kamerasystem ist dazu eingerichtet, einen Zeitpunkt der Anordnung der Kameraeinheit an dem Fahrzeug zu erfassen. Durch die Weiterbildung ergibt sich der Vorteil, dass die Reihenfolge der Anordnung der Kameraeinheiten anhand von Bewegungen der Kameraeinheiten erfasst werden kann. Es ist somit kein gesondertes Anmeldeverfahren erforderlich.

Eine Weiterbildung der Erfindung sieht vor, dass das Kamerasystem dazu eingerichtet, ist Kamerabilder der Kamerasichtbereiche der jeweiligen Kameraeinheiten nach einem vorbestimmten Fusionsverfahren zu einem Gesamtbildeines Gesamtsichtbereichs des Kamerasystems zu fusionieren. Mit anderen Worten ist das Kamerasystem dazu eingerichtet, durch die Kameraeinheiten jeweilige Kamerabilder der jeweiligen Kamerasichtbereiche aufzuzeichnen. Die Kamerabilder der jeweiligen Kameraeinheiten werden nach dem Fusionsverfahren fusioniert, um aus den Kamerabildern der jeweiligen Kamerasichtbereiche ein Gesamtbild eines Gesamtsichtbereichs zu generieren. Das Fusionierungsverfahren kann beispielsweise ein sogenanntes Stitchingverfahren zum Zusammenführen der Kamerabilder umfassen.

Ein zweiter Aspekt der Erfindung betrifft ein Fahrzeug, das zumindest ein Kamerasystem des ersten Aspekts der Erfindung aufweist. Bei dem Fahrzeug kann es sich um ein Kraftfahrzeug handeln, insbesondere um einen Personenkraftwagen und/oder einen Lastkraftwagen. Der Begriff Fahrzeug kann auch Anhänger oder Gespanne einschließen. Das Gespann kann beispielsweise zumindest ein Zugfahrzeug und zumindest einen Anhänger umfassen.

Ein dritter Aspekt der Erfindung betrifft ein Verfahren zum Betreiben eines Kamerasystems für ein Fahrzeug. Das Kamerasystem kann zumindest eine Recheneinheit aufweisen, die einen Prozessor umfasst sowie zumindest eine mobile Kameraeinheit. Die mobile Kameraeinheit kann dazu eingerichtet sein, an einer jeweiligen Bordwand des Fahrzeugs zur Erfassung eines jeweiligen Kamerasichtbereiches angeordnet zu werden. Die mobile Kameraeinheit kann beispielsweise zu diesem Zweck einen Magneten oder eine andere Einrichtung zum nichtpermanenten Anordnen der mobilen Kameraeinheit an dem Fahrzeug umfassen.

In einem ersten Schritt wird durch die zumindest eine Kameraeinheit der jeweilige Kamerasichtbereich der Kameraeinheit erfasst. Die Erfassung kann beispielsweise eine Aufnahme eines Kamerabildes umfassen. Durch das Kamerasystem können in dem Sichtbereich der Kameraeinheit geometrische Parameter der jeweiligen Bordwand erfasst werden. Es kann vorgesehen sein, dass durch das Kamerasystem ein Bilderkennungsalgorithmus angewandt wird, um in dem Kamerabild des jeweiligen Kamerasichtbereiches die geometrischen Parameter der jeweiligen Bordwand, wie beispielsweise Kanten oder Ecken zu erfassen.

In einem weiteren Schritt wird eine Orientierung der zumindest einen mobilen Kameraeinheit in einem in Bezug auf das Fahrzeug erfasst. Mit anderen Worten wird ermittelt, wie die mobile Kameraeinheit an dem Fahrzeug orientiert ist.

In einem weiteren Schritt wird in Abhängigkeit von den geometrischen Parametern der jeweiligen Bordwand und der Orientierung der zumindest einen mobilen Kameraeinheit in Bezug auf das Fahrzeug, ein lokales geometrisches Modell des Fahrzeugs der zumindest einen Kameraeinheit generiert. Mit anderen Worten wird durch das Kamerasystem in Abhängigkeit von den geometrischen Parametern in dem Sichtbereich der jeweiligen Kameraeinheit durch die jeweiligen Kameraeinheit erfasst wurden, das lokale geometrische Modell des Fahrzeugs in Bezug auf die Kameraeinheit ermittelt.

In einem weiteren Schritt wird durch das Kamerasystem ein in dem Kamerasystem gespeichertes, vorgegebenes globales geometrisches a-priori Modell des Fahrzeugs, welches Annahmen in Bezug auf die geometrischen Parameter des Fahrzeugs umfasst, mit dem lokalen geometrischen Modell des Fahrzeugs der zumindest einen mobilen Kameraeinheit und zumindest einem weiteren lokalen geometrischen Modell des Fahrzeugs zu einem globalen geometrischen Modell des Fahrzeugs zusammengeführt.

Durch das Kamerasystem wird eine Lage der zumindest einen mobilen Kameraeinheit in dem globalen Modell des Fahrzeugs ermittelt.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird. Zu der Erfindung gehören auch Weiterbildungen des erfindungsgemäßen Fahrzeugs und des erfindungsgemäßen Verfahrens, die Merkmale aufweisen, wie sie bereits im Zusammenhang mit den Weiterbildungen des erfindungsgemäßen Kamerasystems beschrieben worden sind. Aus diesem Grund sind die entsprechenden Weiterbildungen des erfindungsgemäßen Fahrzeugs und des erfindungsgemäßen Verfahrens hier nicht noch einmal beschrieben.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: eine schematische Darstellung eines Fahrzeugs, welches ein Kamerasystem aufweist;
- Fig. 2: eine weitere schematische Darstellung eines Fahrzeugs;
- Fig. 3: eine schematische Darstellung eines Gesamtsichtbereichs;
- Fig. 4: eine Ermittlung der Höhen der Kameraeinheiten in Bezug auf das Koordinatensystem des Fahrzeugs;
- Fig. 5: eine schematische Darstellung des Fahrzeugs auf einer ansteigenden Ebene;
- Fig. 6: zeigt eine Erfassung eines Winkels α mittels Beschleunigungssensoren; und
- Fig. 7: eine schematische Darstellung eines Ablaufs eines Verfahrens.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

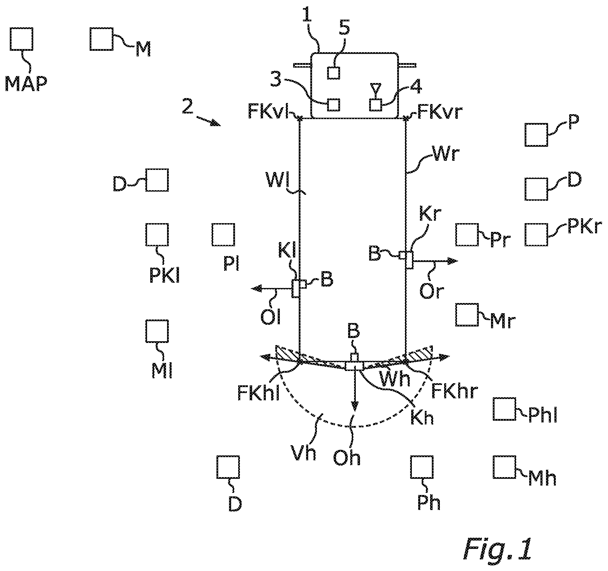

Fig. 1 zeigt eine schematische Darstellung eines Fahrzeugs, welches ein Kamerasystem aufweist.

Bei dem Kraftfahrzeug 1 kann es sich insbesondere um ein Lastwagen handeln. Das Kamerasystem 2 kann eine Recheneinheit 3 und eine oder mehrere Kameraeinheiten Kl,Kr,Kh aufweisen. Die Kameraeinheiten Kl,Kr,Kh können sogenannte mobile Kameraeinheiten Kl,Kr,Kh sein, welche an einer jeweiligen Bordwand Wl,Wr,Wh des Fahrzeugs 1 angeordnet werden können. Die Kameraeinheiten Kl,Kr,Kh können dazu eingerichtet sein, jeweilige Kamerasichtbereiche VI,Vr,Vh optisch zu erfassen. Das Fahrzeug 1 kann eine Fahrzeugsteuereinrichtung 4 aufweisen. Es kann vorgesehen sein, dass das Kamerasystem 2 dazu eingerichtet ist, Kamerabilder Pl,Pr,Ph der jeweiligen Kameraeinheiten Kl,Kr,Kh, welche die jeweiligen Kamerasichtbereiche VI,Vr,Vh der jeweiligen Kameraeinheiten Kl,Kr,Kh abbilden, in einem vorbestimmten Fusionsverfahren zu einem Gesamtbild PG eines Gesamtsichtbereichs VG zu fusionieren, um einem Fahrer ein Wahrnehmen des Gesamtsichtbereichs VG zu ermöglichen und/oder das Gesamtbild PG einer Auswerteeinrichtung des Fahrzeugs 1 bereitzustellen. Das Fusionierungsverfahren kann auch eine Fusion vorsehen, um einen Teilbereich, des Gesamtsichtbereichs VG in einem Gesamtbild PG abbilden zu können, oder um einen abgeschatteten Bereich eines der Kamerasichtbereiche VI,Vr,Vh einer der Kameraeinheiten Kl,Kr,Kh durch Bildabschnitte eines Kamerabildes Pl,Pr,Ph einer weiteren der Kameraeinheiten Kl,Kr,Kh zu ergänzen. Dadurch kann es möglich sein, für eine der Kameraeinheiten Kl,Kr,Kh nicht einsehbare Kamerabereiche VI,Vr,Vh durch eine andere der Kameraeinheiten Kl,Kr,Kh bereitzustellen. Die Kameraeinheiten Kl,Kr,Kh können an jeweiligen Bordwänden Wl,Wr,Wh des Fahrzeugs 1 angeordnet sein, welche eine jeweilige Orientierung OKl,OKr,OKh in Bezug auf das Fahrzeug 1 aufweisen. Um eine Fusion der Kamerabilder Pl,Pr,Ph zu einem Gesamtbild PG zu ermöglichen, kann es erforderlich sein, jeweilige globale Lagen PKI,PKr,PKh der Kameraeinheiten Kl,Kr,Kh in einem globalen Modell des Fahrzeugs 1 zu kennen. Die jeweilige globale Lage PKI,PKr,PKh der jeweiligen Kameraeinheit Kl,Kr,Kh kann eine Position und eine Ausrichtung der jeweiligen Kameraeinheit Kl,Kr,Kh beschreiben.

Die Kameraeinheiten Kl,Kr,Kh können beispielsweise einen Erfassungswinkel 15 größer als 180° aufweisen, sodass sie beispielsweise Kanten ihrer Bordwände Wl,Wr,Wh erfassen können. Die Kameraeinheiten Kl,Kr,Kh können als Fish-Eye-Kameras eingerichtet sein. Das Kamerasystem 2 kann dazu eingerichtet sein, geometrische Parameter P der jeweiligen Bordwände Wl,Wr,Wh zu ermitteln. Die Ermittlung kann basierend auf den jeweiligen Kamerabildern Pl,Pr,Ph der jeweiligen Kameraeinheiten Kl,Kr,Kh erfolgen. Aus den geometrischen Parametern P, welche für die jeweiligen Kameraeinheiten Kl,Kr,Kh ermittelt worden sein können, kann durch das Kamerasystem 2 ein lokales Modell MI,Mr,Mh des Fahrzeugs 1 ermittelt werden, welches die jeweilige Bordwand Wl,Wr,Wh basierend auf den Kamerabildern Pl,Pr,Ph der jeweiligen Kameraeinheit Kl,Kr,Kh beschreiben kann. Das lokale Modell MI,Mr,Mh kann auch eine Lage PKI,PKr,PKh der Kameraeinheit Kl,Kr,Kh in der Bordwand Wl,Wr,Wh umfassen. Um die Fusion der Kamerabilder Pl,Pr,Ph der jeweiligen Kameraeinheiten Kl,Kr,Kh zu ermöglichen, kann eine lokale Lage PKI,PKr,PKh der Kameraeinheit Kl,Kr,Kh an der Bordwand Wl,Wr,Wh in dem lokalen Modell MI,Mr,Mh der jeweiligen Kameraeinheit Kl,Kr,Kh nicht ausreichen. Zu diesem Zweck kann es erforderlich sein, die jeweiligen lokalen Modelle Ml,Mr,Mh des Fahrzeugs 1 zu einem globalen Modell des Fahrzeugs 1 zu fusionieren, um die globalen Lagen PKI,PKr,PKh der Kameraeinheiten Kl,Kr,Kh in einem Fahrzeugreferenzsystem R ermitteln zu können. Zur Herleitung des globalen Modells und der globalen Lagen PKI,PKr,PKh aus den lokalen Fahrzeugmodellen kann in dem Kamerasystem 2 ein geometrisches a-priori Modell MAP des Fahrzeugs 1 gespeichert sein.

Das geometrische a-priori Modell MAP des Fahrzeugs 1 kann darauf basieren, dass bei Fahrzeugen 1 oder Anhängern von bestimmten geometrischen Eigenschaften ausgegangen werden kann, welche Annahmen in Bezug auf die geometrischen Parameter P des Fahrzeugs 1 betreffen. Je nach Fahrzeugtyp kann zum Beispiel bei einem "Rigid-Truck" von einem Fahrzeugchassis und verschiedenen Aufbauten ausgegangen werden. Der Aufbau kann für die diversen Anwendungen jeweils sehr spezifisch sein. Ein Aufbau für Baustoffe, weist in der Regel sogenannte Bordwände Wl,Wr,Wh mit nur geringer Höhe auf. Kofferaufbauten hingegen oder Container bieten einen geschlossenen Raum mit rückwärtigen Türen. Natürlich existieren sehr viel mehr verschiedene Typen. Bei der überwiegenden Zahl von Fahrzeug 1- beziehungsweise Anhängervarianten kann man jedenfalls in Bezog auf die Bordwände Wl,Wr,Wh des Fahrzeugs 1 von einer Stirnwand, zwei Seitenwänden und einer Rückwand in Form von Türen, einer Ladeklappe oder Hebebühne ausgehen. Das gilt für Lastkraftwagen als auch für Anhänger im landwirtschaftlichen Bereich oder im Bausektor. Allen ist gemeinsam, dass die Bordwände Wl,Wr,Wh geometrisch in einem 90° Winkel zueinander angeordnet sind. Diesen Aspekt macht sich die Erfindung u.a. als a priori Wissen zunutze. Die Anordnung in den 90° Winkeln kann als Annahme in Bezug auf die geometrischen Parameter P des Fahrzeugs 1 in dem a-priori Modell MAP vorgegeben sein.

Das a-priori Modell MAP kann diese oder andere Annahmen in Bezug auf die geometrischen Parameter P des Fahrzeugs 1 umfassen. Das a-priori Modell MAP kann beispielsweise vorgeben, dass bestimmte geometrische Parameter P gegenüberliegender Bordwände Wl,Wr,Wh oder benachbarter Bordwände Wl,Wr,Wh identisch sind und/oder bestimmte Relationen zueinander aufweisen.

Es kann beispielsweise durch das a-priori Modell MAP vorgegeben sein, dass eine Fläche der linken Bordwand Wl des Fahrzeugs 1 mit einer Flächen der rechten Bordwand Wr des Fahrzeugs 1 übereinstimmt und somit Kanten der beiden Bordwände Wl,Wr identische Abstände zueinander aufweisen. Es kann auch vorgesehen sein, dass durch eine Annahme des a-priori Modells MAP vorgegeben ist, dass die linke Bordwand Wl und die rechte Bordwand Wr jeweils eine gemeinsame Kante mit der hinteren Bordwand Wh aufweisen. Die beiden Kanten FKhl,FKhr der hinteren Bordwand Wh können identische Längen aufweisen. Aus einer Kombination des lokalen Modells MI, welches die Bordwand Wl und die lokale Lage PKI der Kameraeinheit Kl auf der linken Bordwand Wl beschreibt mit einem lokalen Modell Mr welches die Bordwand Wr und die lokale Lage PKr der Kameraeinheit Kr auf der rechten Seite beschreibt, kann basierend auf den Annahmen des a-priori Modells MAP das globale Modell M des Fahrzeugs 1 ermittelt werden.

Zur Ermittlung der jeweiligen Orientierung OKl,OKr,OKh der jeweiligen Kameraeinheiten Kl,Kr,Kh kann das Kamerasystem 2 dazu eingerichtet sein, die Orientierung OKl,OKr,OKh der jeweiligen Kameraeinheiten Kl,Kr,Kh beispielsweise in Abhängigkeit einer zeitlichen Anordnungsreihenfolge der Kameraeinheiten Kl,Kr,Kh an dem Fahrzeug 1 zu ermitteln. Es kann, vorgesehen sein, dass die Reihenfolge in der Recheneinheit 3 des Kamerasystems 2 gespeichert ist. Diese Reihenfolge kann vorgeben, dass zuerst eine erste der Kameraeinheiten Kl, auf der linken Bordwand Wl anzuordnen ist, dann eine zweite der Kameraeinheiten Kh auf der hinteren BordwandBh und dann eine dritte der Kameraeinheiten Kr auf der rechten Bordwand Wr. Die Anordnung der Kameraeinheiten Kl,Kr,Kh kann beispielsweise durch einen Beschleunigungssensor B der jeweiligen Kameraeinheiten Kl,Kr,Kh erfasst werden. Dieser kann auch dazu eingerichtet sein, eine Ausrichtung der Gravitationsrichtung G in Bezug auf die jeweilige Kameraeinheit Kl,Kr,Kh zu ermitteln.

Neben ausschließlich mobilen Kameraeinheiten Kl,Kr,Kh können natürlich auch am Fahrzeug 1 fest installierte Kameraeinheiten mit einbezogen werden und das vorhandene Gesamtsichtfeld der mobilen Kameraeinheiten Kl,Kr,Kh zu einem größeren zusammenhängenden Gesamtsichtfeld VG zu ergänzen. Dabei geht es nicht darum zwingend ein "klassisches" SurroundView-System mit vollständiger Rundumsicht zu implementieren, sondern vielmehr die Erschließung von zusammenhängenden Bereichen, die sich situativ für die jeweilige Aufgabenstellung ergeben. Das kann sich zum Beispiel auch auf zwei Kameraeinheiten Kl,Kr,Kh beschränken, bei der lediglich adhoc das eine Kamerasichtfeld VI,Vr,Vh der anderen mobilen oder festen Kameraeinheit Kl,Kr,Kh erweitert wird. So kann es zum Beispiel wünschenswert sein, für bestimmte Arbeitsvorgänge wie dem Rangieren mit einem Anhänger in eine Halle das rückwärtige Kamerasichtfeld Vh und eines der seitlichen Kamerasichtfelder VI,Vr einzusehen. Hier würden zwei Kameraeinheiten Kl,Kr,Kh ausreichen. Dabei kann zum Beispiel ein Anhänger völlig ohne Installation vorliegen, sodass zwei mobile Kameraeinheiten Kl,Kr,Kh benötigt würden. Ebenso kann aber auch bereits eine fest installierte Rückfahr-Kameraeinheit vorhanden sein, die temporär um eine weitere mobile Kameraeinheit Kl,Kr,Kh ergänzt wird. Weitere verschiedene Konstellationen sind denkbar, wie zum Beispiel eine fest installierte Rückfahrkamera, eine mobile Kameraeinheit Kr rechts, und eine mobile Kameraeinheit Kl links, Es kann auch vorgesehen sein, eine mobile Kameraeinheit Kl links, und eine mobile Kameraeinheit Kh hinten zu verwenden. Insgesamt sind beliebige Kombinationen möglich.

Die zumindest eine mobile Kameraeinheit Kl,Kr,Kh kann identisch mit einer in Zusammenhang mit einem Verfahren in der DE 10 2019 202 269 A1 offenbarten Kameraeinheit Kl,Kr,Kh sein. Das in der DE 10 2019 202 269 A1 vorgestellte Verfahren erlaubt die eigene Lokalisierung der mobilen Kameraeinheit Kl,Kr,Kh auf einer Seitenwand eines Fahrzeugs 1, welches bevorzugt ein Lastkraftwagen oder Anhänger ist. Bei dieser Art von Fahrzeugen 1 oder Anhängern kann von bestimmten geometrischen Eigenschaften ausgegangen werden. Diese können als Annahmen in Bezug auf die geometrischen Parameter P des Fahrzeugs 1 in dem a-priori Modell MAP des Fahrzeugs 1 vorgegeben sein. Je nach Typ des Fahrzeugs 1 kann man zum Beispiel bei einem "Rigid-Truck" von einem Fahrzeugchassis und verschiedenen Aufbauten ausgehen. Der Aufbau kann für die diversen Anwendungen jeweils sehr spezifisch sein. Ein Aufbau für Baustoffe, weist in der Regel sogenannte Bordwände Wl,Wr,Wh mit nur geringer Höhe auf. Kofferaufbauten hingegen oder Container bieten einen geschlossenen Raum mit rückwärtigen Türen. Natürlich existieren sehr viel mehr verschiedene Typen. Bei der überwiegenden Zahl von Fahrzeugvarianten und/oder Anhängervarianten kann man im a-priori Modell MAP jedenfalls von einer Stirnwand, zwei Seitenwänden und einer Rückwand in Form von Türen, einer Ladeklappe oder Hebebühne als Bordwände WI,Wr,Wh ausgehen. Das gilt für LKW als auch für Anhänger im landwirtschaftlichen Bereich oder im Bausektor.

Allen ist gemeinsam, dass die Bordwände WI,Wr,Wh geometrisch in einem 90° Winkel zueinander angeordnet sein können. Diesen Aspekt macht sich das Kamerasystem 2 u.a. als a priori Wissen zunutze, welches als globales geometrisches a-priori Modell MAP des Fahrzeugs 1 in dem Kamerasystem 2 gespeichert sein kann. Beispielhaft wird in Fig. 1 ein Kamerasystem 2 mit drei mobilen Kameraeinheiten Kl,Kr,Kh beschrieben. Die drei mobilen Kameraeinheiten Kl,Kr,Kh, welche denen der DE 10 2017 208 592 A1 entsprechen können, können durch einen Benutzer am Fahrzeug 1 angebracht sein. Er läuft um das Fahrzeug 1 herum und heftet jeweils eine der mobilen Kameraeinheiten Kl,Kr,Kh an die Seite links Wl, eine der mobilen Kameraeinheiten Kl,Kr,Kh hinten an die Rückwand Wh und eine der mobilen Kameraeinheiten Kl,Kr,Kh an die Seite rechts Wr. Dabei braucht der Benutzer nicht auf eine zentimetergenaue Positionierung auf der jeweiligen Bordwand Wl,Wr,Wh zu achten, sondern platziert die Kameraeinheiten Kl,Kr,Kh grob dort, wo er gerne einen Sichtbereich VI,Vr,Vh hätte und natürlich nur an Positionen, die er ohne Leiter vom Boden aus bequem im Vorbeilaufen erreichen kann.

Erkennung/Ermittlung der Kamerapositionen und der Ausrichtungen: Durch die vorherige Platzierung der mobilen Kameraeinheiten Kl,Kr,Kh ergeben sich folgende Verhältnisse der mobilen Kameraeinheiten Kl,Kr,Kh zueinander. Die Kameraeinheiten Kl,Kr,Kh liegen plan auf der jeweiligen Bordwand Wl,Wr,Wh und blicken orthogonal von der jeweiligen Bordwand Wl,Wr,Wh in eine jeweilige Orientierung OKl,OKr,OKh weg. Die Kameraeinheiten Kl,Kr,Kh können jeweils auf unterschiedlichen Höhen angeordnet sein. Die Kameraeinheit links Kl, auf Höhe hKl, die Kameraeinheit hinten Kh auf Höhe hKh und die Kameraeinheit rechts Kr auf der Höhe hKr. Ebenso können die mobilen Kameraeinheiten Kl,Kr,Kh eine unterschiedliche Entfernung von der Rückwand sKl, sKh sKr aufweisen. Jede der die mobilen Kameraeinheiten Kl,Kr,Kh hat eine arbiträre Rotation um eine eigene Z-Achse in Bezug auf das Fahrzeugkoordinatensystem R. Jede der mobilen Kameraeinheiten Kl,Kr,Kh blickt in eine andere Orientierung Ol,Or,Oh und hat somit eine um näherungsweise 90° beziehungsweise 180° versetzte Rotation um die eigene y-Achse in Bezug auf die anderen Kameraeinheiten Kl,Kr,Kh beziehungsweise das Fahrzeugkoordinatensystem R. Das Verfahren aus DE 10 2019 202 269 A1 kann nun für jede der mobilen Kameraeinheiten Kl,Kr,Kh angewendet werden, um eine Lage PKl,PKr,PKh der jeweiligen Kameraeinheit Kl,Kr,Kh zu ermitteln.

Als Besonderheit gilt hier allerdings, dass durch die unterschiedliche Platzierung/Orientierung OKl,OKr,OKh jede Kameraeinheit Kl,Kr,Kh eine unterschiedliche Umgebung in ihrem Kamerasichtbereich VI,Vr,Vh sieht. Bei einer Vorwärtsfahrt sieht die Kameraeinheit links Kl einen überwiegenden optischen Fluss FI entlang der x-Achse in negativer Richtung, die Kameraeinheit rechts Kr einen überwiegenden optischen Fluss Fr entlang der x-Achse in positiver Richtung und die Kameraeinheit Kh hinten einen überwiegenden optischen Fluss entlang der Z-Achse in positiver Richtung. Bei Verwendung mehrerer Kameraeinheiten Kl,Kr,Kh kann zusätzlich weiteres a priori Wissen in Annahmen in Bezug auf die geometrischen Parameter P des Fahrzeugs 1 in einem globalen geometrischen a-priori Modell MAP des Fahrzeugs 1 hinzugezogen werden. So können die Kameraeinheiten Kl,Kr,Kh sich gegenseitig bereits erkannte geometrische Parameter P übermitteln. Ein Beispiel für geometrische Parameter P können die obere und untere horizontale Kante einer Seitenwand als Bordwand Wl,Wr sein. Die Annahmen des a-priori Modells MAP des Fahrzeugs 1 können umfassen, dass die Bordwände links und rechts Wl,Wr jeweils ein gleiches Höhen-Maß besitzen, da das Fahrzeug 1 symmetrisch aufgebaut ist. In der Regel ist auch die Rückwand gleich hoch, zumindest die obere Kante. Darüber hinaus können die Annahmen des a-priori Modells MAP des Fahrzeugs 1 umfassen, dass die vertikalen Kanten der Seitenwand einen 90° Winkel zu den horizontalen Kanten bilden. Falls Längen der linken Seitenwand Wl erfolgreich ermittelt werden konnte, kann diese gegen die gegenüberliegende rechte Seitenwand Wr plausibilisiert werden.

Die gegenseitige Plausibilisierung und Gewichtung / Filterung kann auf Basis aller beschrieben Daten stattfinden. Dies kann zum Beispiel die initiale statische Erkennung erheblich beschleunigen beziehungsweise die Konfidenz erhöhen. Dieses Konzept kann ebenso für die dynamische Erkennung der Kanten mittels des optischen Flusses Fl,Fr,Fh angewendet werden. Es ist bekannt, wie die jeweiligen ermittelten optischen Flüsse Fl,Fr,Fh sich im Mittel zueinander verhalten müssen. Nachdem die Fahrzeug-Kanten beziehungsweise Flächen ermittelt wurden, kann durch Bezugnahme der Orientierung der Kanten auf die Orientierung OKl,OKr,OKh des Bildsensors der jeweiligen Kameraeinheit Kl,Kr,Kh die jeweilige Rotation auf der jeweiligen Seitenfläche WI,Wr,Wh ermittelt werden.

Demnach sind nun alle relevanten Parameter P jeweiliger lokaler geometrischer Modelle MI,Mr,Mh in Bezug auf die jeweiligen Kameraeinheiten Kl,Kr,Kh bekannt. Jede der Kameraeinheiten Kl,Kr,Kh weiß an welcher Fahrzeugseite sie angebracht ist, kennt die Position auf der jeweiligen Fläche, kennt die eigene Rotation und ihre Höhe zueinander.

Mit dem zuvor genannten Wissen über die geometrischen Zusammenhänge des Fahrzeugs 1 beziehungsweise Anhängers, können die jeweiligen Kamerabilder Pl,Pr,Ph der jeweiligen Bordwand Wl,Wr,Wh ausgerichtet und zu einem Gesamtbild PG zusammengeführt werden. Die Kamerabilder Pl,Pr,Ph können rotiert und zugeschnitten werden, sodass sie beispielsweise exakt an die hinteren vertikalen und den horizontalen Kanten beziehungsweise deren Schnittpunkte ausgerichtet sind. Die einzelnen Kamerabilder Pl,Pr,Ph können nun transformiert und zu dem Gesamtbild PG zusammengeführt werden. Es kann zum Beispiel eine gemeinsame Sphäre gebildet werden, bei denen die Einzelsichtfelder VI,Vr,Vh aneinander angrenzen.

Optional kann folgende Konvention verwendet werden, um den Erkennungsprozess zu Beginn zu beschleunigen, beziehungsweise robuster zu gestalten. Hierzu könnte eine vorgegebene zeitliche Reihenfolge der Anordnung der Kameraeinheiten Kl,Kr,Kh vorgegeben sein. Falls die Kameraeinheiten Kl,Kr,Kh in der vorgegebenen Reihenfolge durch den Benutzer platziert werden, könnte daraus die jeweilige Orientierung OKl,OKr,OKh der Kameraeinheiten Kl,Kr,Kh ermittelt werden. Die Reihenfolge könnte vorgeben, dass von der Fahrerseite ausgehend die erste Kameraeinheit Kl,Kr,Kh auf der Fahrzeugseite links platziert wird, dann die zweite Kameraeinheit Kl,Kr,Kh an der hinteren Seite und die dritte Kameraeinheit Kl,Kr,Kh zuletzt an der rechten Seite. Hält sich der Benutzer an diese Konvention, könnte jede Kameraeinheit Kl,Kr,Kh bereits vor Bewegung des Fahrzeugs 1 in Erfahrung bringen, an welcher Fahrzeugseite sie platziert wurde. Hierzu braucht lediglich der Beschleunigungssensor B überwacht werden und ein entsprechender Sprung beziehungsweise Verhalten beim Anheften der Kameraeinheit Kl,Kr,Kh mittels der starken Magnete detektiert werden. Die Kameraeinheit Kl,Kr,Kh kann den jeweiligen Zeitpunkt erfassen und mit den anderen Kameraeinheiten Kl,Kr,Kh austauschen/synchronisieren und so die Reihenfolge und daher die Fahrzeugseite, an der sie angeheftet wurde, bestimmen. Jede Kameraeinheit Kl,Kr,Kh kann dabei identisch sein und muss also nicht eine vorgegebene Nummer aufweisen. Optional können eine oder mehrere Kameraeinheiten Kl,Kr,Kh fest am Fahrzeug 1 installiert sein und durch weitere mobile ergänzt werden. Die fest installierten Kameraeinheiten Kl,Kr,Kh können Zugriff auf den Fahrzeugbus haben und optional die geometrischen Parameter P des Fahrzeugs 1 von einem Fahrzeugsteuergerät beziehen und diese in dem a-priori Modell MAP des Fahrzeugs 1 speichern. Die geometrischen Parameter P des Fahrzeugs 1 können dadurch den anderen Kameraeinheiten Kl,Kr,Kh zur Verfügung gestellt werden, damit die geometrischen Parameter P für eine Erkennung gewinnbringend verwendet werden können. Alternativ kann sich statt der fest installierten um drahtlose mobile Kameraeinheiten Kl,Kr,Kh handeln, die über eine Kamerahaltung definiert mit dem Fahrzeug 1 verbunden sind, wie es in der DE 10 2018 218 735 A1 offenbart ist.

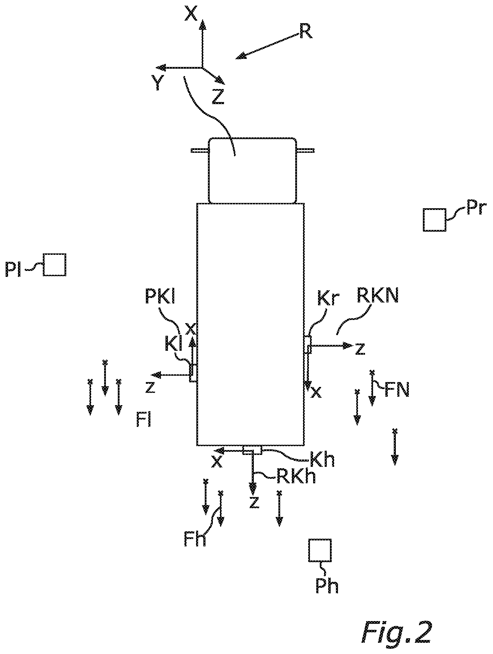

Figur 2 zeigt eine weitere schematische Darstellung eines Fahrzeugs 1.

Es kann vorgesehen sein, dass die geometrischen Parameter P und die lokalen Lagen PKI,PKr,PKh der jeweiligen Kameraeinheiten Kl,Kr,Kh in den jeweiligen lokalen Modellen MI,Mr,Mh in Bezug auf jeweilige lokale Koordinatensysteme RKl,RKr,RKh der jeweiligen Kameraeinheiten Kl,Kr,Kh vorgegeben sind, wobei eine Z-Richtung der jeweiligen Kameraeinheit Kl,Kr,Kh in eine Blickrichtung der Kameraeinheit Kl,Kr,Kh definiert ist und eine X- und Y-Richtung in Bezug auf eine Rückwand der jeweiligen Kameraeinheit Kl,Kr,Kh. Bei einer Annahme einer planen Auflage PKl,PKr,PKh der jeweiligen Kameraeinheiten Kl,Kr,Kh auf den Bordwänden Wl,Wr,Wh und einer orthogonalen Ausrichtung der jeweiligen Bordwände Wl,Wr,Wh kann angenommen werden, dass die Richtungen X und Y der lokalen Koordinatensysteme RKI,RKr,RKh in einer Ebene der jeweiligen Bordwand Wl,Wr,Wh liegen. Das globale Koordinatensystem R des Fahrzeugs 1 kann derart definiert sein, dass eine X Richtung in eine Fahrzeuglängsrichtung ausgerichtet ist, eine Y Richtung in eine Querrichtung des Fahrzeugs 1 und eine Z Richtung normal zu einer Oberseite des Fahrzeugs 1.

Nachdem der Benutzer die Kameraeinheiten Kl,Kr,Kh am Fahrzeug 1 platziert hat, ist eine sofortige Verfügbarkeit des Systems wünschenswert. Für die einzelne Erkennung nach DE 10 2019 202 269 A1 wird jedoch neben der statischen Erkennung zusätzlich der optische Fluss ausgewertet, da sich bei der Verwendung rein statischer Kanten evtl. noch Unsicherheiten oder Mehrdeutigkeiten ergeben. Sobald dem System mehr Daten vorliegen, können diese jeweils iterativ hinzugezogen werden, um dann die Genauigkeit und Robustheit zu steigern. Insbesondere sobald das Fahrzeug 1 sich das erste Mal nach Platzierung der Kameraeinheiten Kl,Kr,Kh bewegt, adaptiert es sich so lange bis eine zufriedenstellende Konfiguration gefunden wurde.

Das Kamerasystem 2 kann dazu eingerichtet sein, die geometrischen Parameter P nach dem statischen Erfassungsverfahren und alternativ oder zusätzlich zu dem statischen Erfassungsverfahren nach einem dynamischen Erfassungsverfahren zu erfassen. Dabei können aus mehreren Kamerabildern Pl,Pr,Ph einer jeweiligen Kameraeinheit Kl,Kr,Kh statische Bildbereiche, welche beispielsweise die Bordwand Wl,Wr,Wh zeigen und dynamische Bereiche, welche sich ändernde Bereiche der Kamerabilder Pl,Pr,Ph zeigen, identifiziert werden. Die geometrischen Parameter P können beispielsweise durch eine Erkennung von Grenzen zwischen dynamischen und statischen Bereichen ermittelt werden.

Durch das Kamerasystem 2 kann auch ein jeweiliger optischer Fluss Fl,Fr,Fh für die jeweiligen Kameraeinheiten Kl,Kr,Kh ermittelt werden, wenn sich das Fahrzeug 1 bewegt. Es können beispielsweise einzelne Punkte in aufeinanderfolgenden Kamerabildern Pl,Pr,Ph einer jeweiligen Kameraeinheit Kl,Kr,Kh verfolgt werden, um aus den Bewegungen der einzelnen Punkte einen Verlauf des optischen Flusses Fl,Fr,Fh zu ermitteln. Durch die Ermittlung des optischen Flusses kann beispielsweise für jede der Kameraeinheiten Kl,Kr,Kh ein jeweiliger Vektor ermittelt werden, aus welchem sich eine Bewegung des Fahrzeugs 1 in Bezug auf die jeweilige Kameraeinheit Kl,Kr,Kh ermitteln lässt. Daraus kann die Orientierung OKl,OKr,OKh der jeweiligen Kameraeinheit Kl,Kr,Kh in Bezug auf das Fahrzeug 1 ermittelt werden.

Im Rahmen der vorliegenden Offenbarung kann ein Objekterkennungsalgorithmus als ein Computeralgorithmus verstanden werden, der in der Lage ist, eines oder mehrere Objekte innerhalb eines bereitgestellten Eingangsdatensatzes, beispielsweise eines Kamerabildes, zu identifizieren und zu lokalisieren, beispielsweise indem er entsprechende Begrenzungsboxen oder Bereiche von Interesse, ROI (englisch: "region of interest"), festlegt und insbesondere jeder der Begrenzungsboxen eine entsprechende Objektklasse zuordnet, wobei die Objektklassen aus einem vordefinierten Satz von Objektklassen ausgewählt werden können. Dabei kann die Zuweisung einer Objektklasse zu einer Begrenzungsbox derart verstanden werden, dass ein entsprechender Konfidenzwert oder eine Wahrscheinlichkeit dafür, dass das innerhalb der Begrenzungsbox identifizierte Objekt zu der entsprechenden Objektklasse gehört, bereitgestellt wird. Zum Beispiel kann der Algorithmus für eine gegebene Begrenzungsbox für jede der Objektklassen einen solchen Konfidenzwert oder eine Wahrscheinlichkeit bereitstellen. Die Zuweisung der Objektklasse kann zum Beispiel die Auswahl oder Bereitstellung der Objektklasse mit dem größten Konfidenzwert oder der größten Wahrscheinlichkeit beinhalten. Alternativ kann der Algorithmus auch lediglich die Begrenzungsboxen festlegen, ohne eine entsprechende Objektklasse zuzuordnen.

Eine Korrelation der Kameraeinheiten Kl,Kr,Kh untereinander hinsichtlich des optischen Flusses Fl,Fr,Fh erlaubt darüber hinaus eine weitere Optimierung Richtung Robustheit, Geschwindigkeit, Genauigkeit. Es kann auch eine Rotation des Fahrzeuges 1 über die Korrelation der "überwiegenden" optischen Flüsse Fl,Fr,Fh ermittelt werden. Es kann beispielsweise die Rotation des Fahrzeuges 1 um die Z-Achse des Fahrzeugkoordinatensystems R bestimmen oder invers die Fahrzeugtrajektorie/Beschleunigung dazu verwendet werden, einen korrelierten optischen Fluss Fl,Fr,Fh oder den der einzelnen Kameraeinheiten Kl,Kr,Kh zu plausibilisieren, zu gewichten oder optimieren.

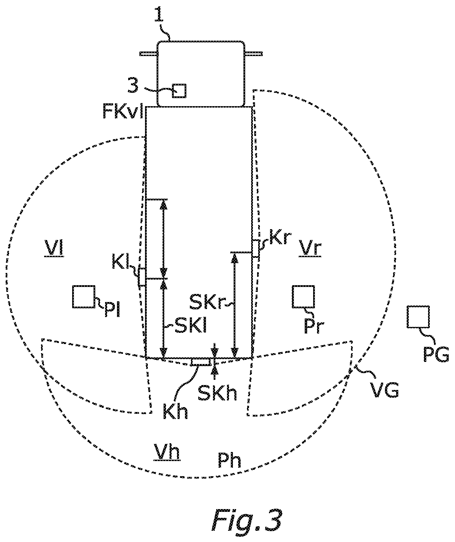

Fig.3 zeigt eine schematische Darstellung eines Gesamtsichtbereichs VG.

Es kann vorgesehen sein, dass Messdaten der jeweiligen Kameraeinheiten Kl,Kr,Kh durch das Kamerasystem 2 untereinander ausgetauscht werden, um Aufnahmen und/oder geometrische Parameter P der jeweiligen Kameraeinheiten Kl,Kr,Kh untereinander zu plausibilisieren. Dabei können beispielsweise in Kamerabildern Pl,Pr,Ph einer der Kameraeinheiten Kl,Kr,Kh nicht erkannte geometrische Parameter P durch geometrische Parameter P ergänzt werden, welche in KamerabildernPl,Pr,Ph anderer Kameraeinheiten Kl,Kr,Kh erfasste wurden. Es können auch Erfassungsdaten D zwischen den Kameraeinheiten Kl,Kr,Kh ausgetauscht werden, welche beispielsweise erfasste Linienbereiche beschreiben können. Figur 3 zeigt beispielsweise, dass der Kamerasichtbereich VI der linken Kameraeinheit Kl nicht ausreicht, um die gesamte linke Bordwand Wl zu erfassen. Dadurch kann es beispielsweise nicht möglich sein, die beiden vertikalen Kanten FKvl, FKhl der linken Bordwand Wl und somit eine Länge der linken Bordwand Wl zu erfassen. Die Ermittlung des geometrischen Parameters P welcher die Länge der linken Bordwand Wl beschreibt, kann somit aus dem Kamerabild Pl der linken Kameraeinheit Kl nicht möglich sein. Folglich kann es auch nicht möglich sein, eine Lage PKI,PKr,PKh der linken Kameraeinheit Kl in Bezug auf die Bordwand Wl in dem lokalen Modell MI zu ermitteln. Der geometrische Parameters P bezüglich der Bordwandlänge kann unter Ausnutzung der Annahme des a-priori Modells MAP, dass die gegenüberliegenden Bordwände links und rechts Wl,Wr identisch sind, aus dem lokalen Modell Mr der rechten Kameraeinheit Kr importiert werden. Dadurch kann das lokale Modell MI der linken Kameraeinheit Kl mit geometrischen Parametern P oder Erfassungsdaten D der rechten Kameraeinheit Kr ergänzt werden, sodass die Länge der linken Bordwand Wl in diesem ebenfalls bekannt ist. Aus einem erfassten Abstand SKI der linken Kameraeinheit Kl zu der hinteren Kante FKhl kann daraus die Lage PKI der Kameraeinheit Kl in der linken Bordwand Wl ermittelt werden.

Über eine Kamerahalterung kann, beispielsweise per RFID-Kommunikation, und optionalen Zugriff über eine Drahtlosverbindung auf den Fahrzeugbus, über ein Fahrzeugsteuergerät 4 mit Fahrzeugbusanbindung und Drahtlosverbindung, kann die jeweilige Kameraeinheit Kl,Kr,Kh die eigene definierte Lage PKl,PKr,PKh und Orientierung OKl,OKr,OKh am Fahrzeug 1 sowie Fahrzeugdaten selbst ermitteln und gewinnbringend in dem Erkennungsprozess im Verbund mit den anderen Kameraeinheiten Kl,Kr,Kh einsetzen. Hier sei noch erwähnt, dass die Kameraeinheiten Kl,Kr,Kh im Verbund arbeiten und die Erkennung beziehungsweise Teilschritte z.T. einzeln, dann kollaborativ verteilt auf den Kameraeinheiten Kl,Kr,Kh oder zentral stattfinden kann.

Dabei kann eine der Kameraeinheiten Kl,Kr,Kh zumindest zeitweise eine "Masterrolle" einnehmen und als Recheneinheit 3 des Kamerasystems 2 fungieren. Alternativ kann ein zentrales Fahrzeugsteuergerät 4 mit eingebunden werden und die Erkennung vollständig, verteilt kollaborativ oder zeitweise in Masterrolle auf dem Fahrzeugsteuergerät 4ausgeführt werden. Optional gilt eine folgende Besonderheit, wenn im Zweifel eine oder mehrere Fahrzeugkanten nicht eindeutig erkennbar sind. Dies kann zum Beispiel die vordere linke vertikale Fahrzeugkante FKvl betreffen, wenn die Kameraeinheit Kl,Kr,Kh recht weit hinten platziert ist und das Fahrzeug 1 entsprechend lang ist. Hierbei sollte das System trotzdem funktionieren und bei hinreichend genügend genauen/robusten Informationen zum Beispiel eine fehlende Kante aus den Daten der anderen ermitteln oder das Fehlen ignorieren. Das Sichtfeld der Kameraeinheit Kl links kann zum Beispiel trotz fehlender Kanten FKvl aufgesetzt werden. Der Öffnungswinkel der Kameraeinheit Kl,Kr,Kh (beziehungsweise der verwendete Imager-Bereich der aus dem gesamten Imager-Bereich ausgeschnitten wird, könnte symmetrisch konfiguriert werden. Also würde der Sichtbereich der linken Kameraeinheit KI den Bereich von der Mitte des Bildsensors bis zur hinteren Kante FKhl des Fahrzeugs 1 abdecken (Strecke SKI )) und diesen Wert auch für den Bereich von der Bildsensormitte nach vorne verwenden. Alternativ können aber auch die Daten des Fahrzeugs 1, die auf andere zuvor beschrieben Weise ermittelt wurden verwendet werden.

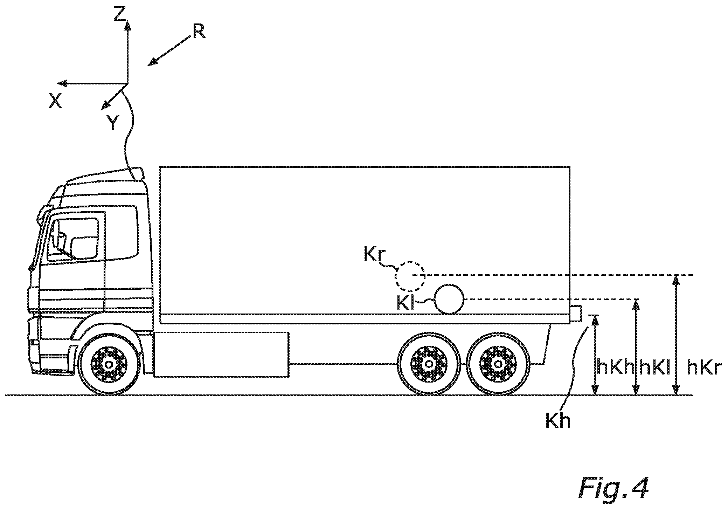

Fig. 4 zeigt eine Ermittlung der hKl,hKr,hKh Höhen der Kameraeinheiten Kl,Kr,Kh in Bezug auf das Koordinatensystem R des Fahrzeugs.

Es kann der Fall vorliegen dass die Kameraeinheiten Kl,Kr,Kh in unterschiedlichen Höhen hKl,hKr,hKh angeordnet sind. Aus den lokalen Lagen der Kameraeinheiten Kl,Kr,Kh in Bezug auf die jeweilige Bordwand Wl,Wr,Wh können unter Berücksichtigung der Vorgaben des a-priori Modell MAP, die globalen Lagen PKI,PKr,PKh der Kameraeinheiten Kl,Kr,Kh in Bezug auf das Fahrzeug 1 ermittelt werden, welche Höhen hKl,hKr,hKh die jeweiligen Kameraeinheiten Kl,Kr,Kh in Bezug auf das Fahrzeug 1 aufweisen.

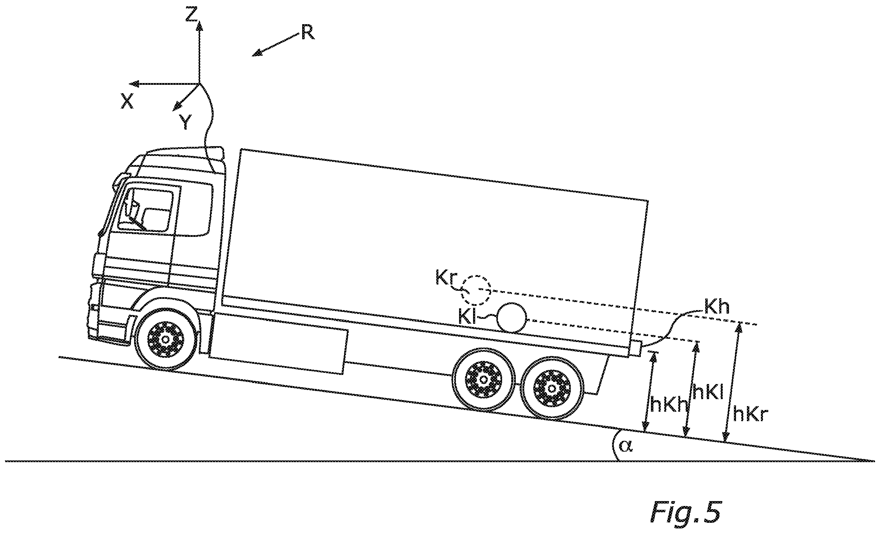

Fig. 5 zeigt eine schematische Darstellung des Fahrzeugs 1 auf einer ansteigenden Ebene. Die Ebene kann ein Winkel α mit einer horizontalen Ebene einschließen. Dadurch kann das Fahrzeug 1 gegenüber seiner Umgebung um den Winkel α rotiert sein.

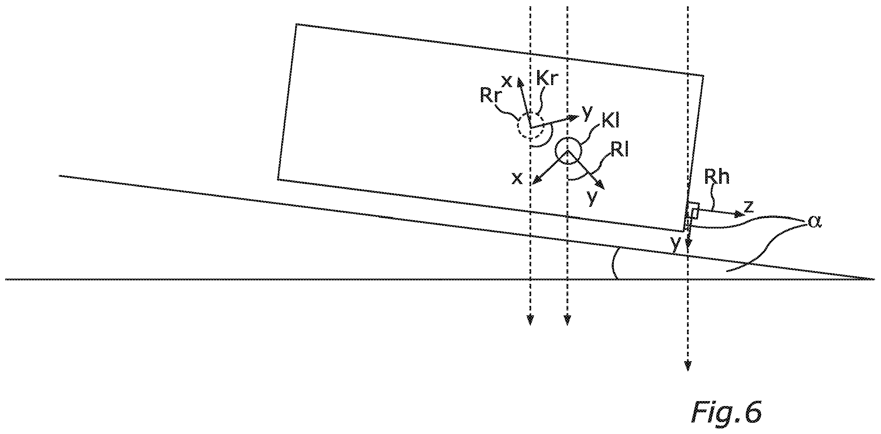

Fig. 6 zeigt eine Erfassung des Winkels α mittels Beschleunigungssensoren B.

Wie in der DE 10 2019 202 269 A1 beschrieben kann die Kameraeinheit Kl,Kr,Kh mit dem integrierten Beschleunigungssensor B eine Richtung der Gravitation ermitteln. Optional kann die jeweilige Neigung α der drei Kameraeinheiten Kl,Kr,Kh zur Richtung der Gravitation G miteinander korreliert werden, um noch eine optimierte Detektion zu erhalten. Hierzu können sich die Kameraeinheiten Kl,Kr,Kh die Messwerte der Beschleunigungssensoren B jeweils kabellos oder kabelgebunden zusenden. Eine Gesamtneigung α beziehungsweise Rotation des Kamerasystems 2 und somit auch des Fahrzeuges 1 lässt sich hierdurch bestimmen. Im Detail kann die hintere Kameraeinheit Kh den Nickwinkel α des Fahrzeuges 1 bestimmen, indem mithilfe des internen Beschleunigungssensors B die Rotation um die eigene x-Achse bestimmt wird. Diese Rotation entspricht dem Nickwinkel α des Fahrzeugs 1, der bei den beiden Seitenkameras Kl,Kr berücksichtigt werden kann. Hierbei wird vorausgesetzt, dass die Kameraeinheit Kl,Kr,Kh plan auf der jeweiligen Bordwand Wl,Wr,Wh aufliegt. Andersherum kann der Wankwinkel α des Fahrzeugs 1 mit der Rotation der beiden Seitenkameras Kl,Kr jeweils um die eigene x-Achse bestimmt werden. Optional können noch die Geschwindigkeits- und Beschleunigungswerte, Neigung des Fahrzeugs 1 mit hinzugezogen werden, um die Erkennung noch weiter zu optimieren. Alle Parameter P können dazu dienen, die Erkennung zu optimieren, wahlweise Richtung Genauigkeit, Robustheit/Plausibilisierung oder Geschwindigkeit.

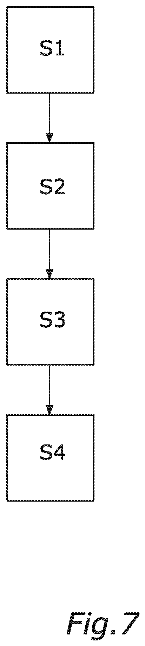

Fig. 7 zeigt eine schematische Darstellung eines Ablaufs eines Verfahrens zum Betreiben eines Kamerasystems 2 für ein Fahrzeug 1.

Das Kamerasystems 2 kann zumindest eine Recheneinheit 3, aufweisend einen Prozessor und zumindest eine mobile Kameraeinheit Kl,Kr,Kh aufweisen, wobei die zumindest eine mobile Kameraeinheit Kl,Kr,Kh zur Anordnung an eine jeweilige Bordwand WI,Wr,Wh des Fahrzeugs 1 und zur Erfassung eines jeweiligen Kamerasichtbereiches VI,Vr,Vh eingerichtet ist.

Ein Schritt S1 kann ein Erfassen geometrischer Parameter P der jeweiligen Bordwand Wl,Wr,Wh in dem Kamerasichtbereich VI,Vr,Vh der Kameraeinheit Kl,Kr,Kh durch das Kamerasystem 2 umfassen.

Ein Schritt S2 kann ein Erfassen einer Orientierung OKl,OKr,OKh der zumindest einen mobilen Kameraeinheit Kl,Kr,Kh in einem vorgegebenen Fahrzeugkoordinatensystem R durch das Kamerasystem 2 umfassen.

Ein Schritt S3 kann ein Generieren eines lokalen geometrischen Modells Ml,Mr,Mh des Fahrzeugs 1 der zumindest einen mobilen Kameraeinheit Kl,Kr,Kh in Abhängigkeit von den geometrischen Parametern P der jeweiligen Bordwand Wl,Wr,Wh und der Orientierung OKl,OKr,OKh der zumindest einen mobilen Kameraeinheit Kl,Kr,Kh umfassen.

Ein Schritt S4 kann ein Zusammenführen eines vorgegebenen globalen geometrischen a-priori Modells MAP des Fahrzeugs 1, welches Annahmen in Bezug auf die geometrischen Parameter P des Fahrzeugs 1 umfasst, mit dem lokalen geometrischen Modell des Fahrzeugs 1 der zumindest einen mobilen Kameraeinheit Kl,Kr,Kh und zumindest einem weiteren lokalen geometrischen Modell Ml,Mr,Mh des Fahrzeugs 1 zu einem globalen Modell M des Fahrzeugs 1 durch das Kamerasystem 2 umfassen, wobei ein Ermitteln einer Lage PKI,PKr,PKh der zumindest einen mobilen Kameraeinheit Kl,Kr,Kh in dem globalen Modell M des Fahrzeugs 1 durch das Kamerasystem 2 erfolgen kann.

Die Platzierung der Kameraeinheiten Kl,Kr,Kh an durch den Benutzer erreichbare Höhen und der Tatsache, dass die Kameraeinheiten Kl,Kr,Kh orthogonal vom Fahrzeug 1 wegschauen, können für bestimmte Situation im Vergleich zu klassisch bei Surround-View Systemen positionierten Kameraeinheiten Kl,Kr,Kh Vorteile bringen. Es lassen sich für bestimmte Situation bessere Perspektiven mit weniger Verzerrung und höherer Auflösung erzeugen.

Beim Rückwärtsfahren beziehungsweise beim Rangieren, kann aus den seitlichen Kameraeinheiten Kl,Kr,Kh mit der rückwärtigen eine weniger verzerrte und höher aufgelöste Sicht erstellt werden. Sie kommt der Sicht näher, die ein Einweiser hätte, der neben dem Fahrzeug 1 steht. Zusätzlich kann durch den großen Öffnungswinkel und die geringere Höhe mehr Kontext des Fahrzeugs 1 optisch erfasst werden. Beim Rangieren in einer Halle zum Beispiel können die Kameraeinheiten Kl,Kr,Kh auch nach oben blicken und eine Kollision bei zu geringen Höhen vermeiden. Ein weiterer Vorteil ist der Bezug auf die Fahrzeugkante hinsichtlich der Genauigkeit. Bei einem fest installieren System mit Kameraeinheiten Kl,Kr,Kh mit einem Öffnungswinkel >180° und mehreren Megapixel Auflösung bedeutet jedes Zehntel Grad mechanische Abweichung zum Beispiel Verkippung eine effektive Abweichung einer größere Anzahl Pixelzeilen im Bild. Dies hat erheblichen Einfluss zum Beispiel bezogen auf eine Entfernung von zum Beispiel 2m von der Fahrzeugkante. Bei der Ausrichtung zur Fahrzeugkante kann im Umkehrschluss recht genau in Granularität von Pixelzeilen ausgerichtet werden.

Insgesamt zeigt das Beispiel, wie ein mobiles selbstkalibrierendes Surround-View-System bereitgestellt werden kann.

### Bezugszeichenliste

- 1: Fahrzeug
- 2: Kamerasystem
- 3: Recheneinheit
- 4: Steuereinrichtung
- 5: Reihenfolge
- Kl,Kr,Kh: Kameraeinheit
- PKI,PKr,PKh: Lage
- P: Parameter
- B: Beschleunigungssensor
- Wl,Wr,Wh: Bordwand
- VI,Vr,Vh: Kamerasichtbereich
- VG: Gesamtsichtbereich
- Pl,Pr,Ph: Kamerabild
- PG: Gesamtbild
- Fl,Fr,Fh: Flussverlauf
- G: Gravitationsrichtung
- M: globales Modell
- MAP: a-Priori Modell
- Ml,Mr,Mh: lokales Modell
- D: Erfassungsdaten
- OKl,OKr,OKh: Orientierung
- R: Fahrzeugreferenzsystem
- Rl,Rr,Rh: Lokales Referenzsystem
- hKl,hKr,hKh: Höhen
- sKl, sKh sKr: Entfernung zur hinteren Bordwand
- FKhl,FKhr,FKvl: Kanten

## Patentansprüche

1. Kamerasystem (2) für ein Fahrzeug (1), umfassend zumindest eine Recheneinheit (3), aufweisend einen Prozessor und zumindest eine mobile Kameraeinheit (Kl,Kr,Kh), wobei
die zumindest eine mobile Kameraeinheit (Kl,Kr,Kh) zur Anordnung an eine jeweilige Bordwand (WI,Wr,Wh) des Fahrzeugs (1) und zur Erfassung eines jeweiligen Kamerasichtbereiches (VI,Vr,Vh) eingerichtet ist, und
das Kamerasystem (2) dazu eingerichtet ist, in dem Kamerasichtbereich (VI,Vr,Vh) der Kameraeinheit (Kl,Kr,Kh) geometrische Parameter (P) der jeweiligen Bordwand (WI,Wr,Wh) zu erfassen,
eine Orientierung (OKl,OKr,OKh) der zumindest einen mobilen Kameraeinheit (Kl,Kr,Kh) in einem vorgegebenen Fahrzeugkoordinatensystem (R) zu erfassen,
in Abhängigkeit von den geometrischen Parameter (P) der jeweiligen Bordwand (WI,Wr,Wh) und der Orientierung (OKl,OKr,OKh) der zumindest einen mobilen Kameraeinheit (Kl,Kr,Kh) in dem vorgegebenen Fahrzeugkoordinatensystem (R) ein lokales geometrisches Modell (MI,Mr,Mh) des Fahrzeugs (1) der zumindest einen mobilen Kameraeinheit (KI,Kr,Kh) zu generieren,
wobei in dem Kamerasystem (2) ein vorgegebenes globales geometrisches a-priori Modell (MAP) des Fahrzeugs (1) gespeichert ist, welches Annahmen in Bezug auf die geometrischen Parameter (P) des Fahrzeugs (1) umfasst,
**dadurch gekennzeichnet, dass**
das Kamerasystem (2) dazu eingerichtet ist, das vorgegebene globale geometrische a-priori Modell (MAP) des Fahrzeugs (1) mit dem lokalen geometrischen Modell (MI,Mr,Mh) des Fahrzeugs (1) der zumindest einen mobilen Kameraeinheit (Kl,Kr,Kh) und zumindest einem weiteren lokalen geometrischen Modell (MI,Mr,Mh) des Fahrzeugs (1) zu einem globalen Modell (M) des Fahrzeugs (1) zusammenzuführen, und
eine Lage (PKI,PKr,PKh) der zumindest einen mobilen Kameraeinheit (KI,Kr,Kh) in dem globalen Modell des Fahrzeugs (1) zu ermitteln.

2. Kamerasystem (2) nach Anspruch 1 wobei das Kamerasystem (2) dazu eingerichtet ist, jeweilige Erfassungsdaten (D) der zumindest zwei Kameraeinheiten (Kl,Kr,Kh) und/oder geometrische Parameter (P) der zumindest zwei Kameraeinheiten (Kl,Kr,Kh) zu plausibilisieren.

3. Kamerasystem (2) nach Anspruch 1 oder 2 wobei das Kamerasystem (2) dazu eingerichtet ist, die geometrischen Parameter (P) der jeweiligen Bordwand (WI,Wr,Wh) in dem Kamerasichtbereich (VI,Vr,Vh) der Kameraeinheit (Kl,Kr,Kh), nach einem statischen Detektionsverfahren zu erfassen.

4. Kamerasystem (2) nach einem der vorhergehenden Ansprüche wobei das Kamerasystem (2) dazu eingerichtet ist, die geometrischen Parameter (P) der jeweiligen Bordwand (WI,Wr,Wh) in dem Kamerasichtbereich (VI,Vr,Vh) der Kameraeinheit (Kl,Kr,Kh), nach einem dynamischen Detektionsverfahren zu erfassen, wobei das dynamische Detektionsverfahren ein Erfassen eines optischen Flussverlaufs (Fl,Fr,Fh) umfasst.

5. Kamerasystem (2) nach Anspruch 4, wobei das Kamerasystem (2) dazu eingerichtet ist, eine Ausrichtung der zumindest einen Kameraeinheit (KI,Kr,Kh) in dem globalen Modell (M) in Abhängigkeit des Flussverlaufs (Fl,Fr,Fh) zu ermitteln.

6. Kamerasystem (2) nach einem der vorhergehenden Ansprüche, wobei die zumindest eine Kameraeinheit (Kl,Kr,Kh) einen Beschleunigungssensor (B) umfasst, der dazu eingerichtet ist eine Gravitationsrichtung (G) in Bezug auf die zumindest eine Kameraeinheit (Kl,Kr,Kh) zu ermitteln, und das Kamerasystem (2) dazu eingerichtet ist, aus der zumindest einen Gravitationsrichtung (G) eine Lage (PKI,PKr,PKh) des globalen Kamerasystems (2) in Bezug auf eine Umgebung zu ermitteln.

7. Kamerasystem (2) nach einem der vorhergehenden Ansprüche wobei das Kamerasystem (2) dazu eingerichtet ist, die Orientierung (Ol,Or,Oh ) der zumindest einen Kameraeinheit (Kl,Kr,Kh) in Abhängigkeit einer Anordnungsreihenfolge zu ermitteln.

8. Kamerasystem (2) nach einem der vorhergehenden Ansprüche, wobei das Kamerasystem (2) zumindest eine fest an dem Fahrzeug (1) angeordnete Kameraeinheit (Kl,Kr,Kh) aufweist.

9. Kamerasystem (2) nach einem der vorhergehenden Ansprüche, wobei das Kamerasystem (2) dazu eingerichtet ist, eine Anordnung der zumindest einen Kameraeinheit (Kl,Kr,Kh) durch eine Erfassung einer vorbestimmten Bewegung durch den Beschleunigungssensor (B) der zumindest einen Kameraeinheit (Kl,Kr,Kh) zu erfassen.

10. Kamerasystem (2) nach einem der vorhergehenden Ansprüche, wobei das Kamerasystem (2) dazu eingerichtet ist, Kamerabilder (PI,Pr,Ph) der Kamerasichtbereiche (VI,Vr,Vh) der jeweiligen Kameraeinheiten (Kl,Kr,Kh) nach einem vorbestimmten Fusionsverfahren zu fusionieren.

11. Fahrzeug (1), umfassend ein Kamerasystem (2) nach einem der Ansprüche 1 bis 10.

12. Verfahren zum Betreiben eines Kamerasystems (2) für ein Fahrzeug (1), wobei das Kamerasystems (2), zumindest eine Recheneinheit (3), aufweisend einen Prozessor und zumindest eine mobile Kameraeinheit (Kl,Kr,Kh) umfasst, wobei die zumindest eine mobile Kameraeinheit (KI,Kr,Kh) zur Anordnung an eine jeweilige Bordwand (WI,Wr,Wh) des Fahrzeugs (1) und zur Erfassung eines jeweiligen Kamerasichtbereiches (VI,Vr,Vh) eingerichtet ist, umfassend die Schritte:
Erfassen geometrischer Parameter (P) der jeweiligen Bordwand (WI,Wr,Wh) in dem Kamerasichtbereich (VI,Vr,Vh) der Kameraeinheit (Kl,Kr,Kh) durch das Kamerasystem (2);
Erfassen einer Orientierung (OKl,OKr,OKh) der zumindest einen mobilen Kameraeinheit (Kl,Kr,Kh) in einem vorgegebenen Fahrzeugkoordinatensystem (R) durch das Kamerasystem (2),
Generieren eines lokalen geometrischen Modells (MI,Mr,Mh) des Fahrzeugs (1) der zumindest einen mobilen Kameraeinheit (Kl,Kr,Kh) in Abhängigkeit von den geometrischen Parametern (P) der jeweiligen Bordwand (WI,Wr,Wh) und der Orientierung (OKl,OKr,OKh) der zumindest einen mobilen Kameraeinheit (Kl,Kr,Kh);
Zusammenführen eines vorgegebenen globalen geometrischen a-priori Modells (MAP) des Fahrzeugs (1), welches Annahmen in Bezug auf die geometrischen Parameter (P) des Fahrzeugs (1) umfasst mit dem lokalen geometrischen Modell (MI,Mr,Mh) des Fahrzeugs (1) der zumindest einen mobilen Kameraeinheit (Kl,Kr,Kh) und zumindest einem weiteren lokalen geometrischen Modell (MI,Mr,Mh) des Fahrzeugs (1) zu einem globalen Modell des Fahrzeugs (1) durch das Kamerasystem (2); und
Ermitteln einer Lage (PKI,PKr,PKh) der zumindest einen mobilen Kameraeinheit (Kl,Kr,Kh) in dem globalen Modell (M) des Fahrzeugs (1) durch das Kamerasystem (2).

## Claims

1. A camera system (2) for a vehicle (1), comprising at least one computing unit (3) having a processor and at least one mobile camera unit (KI,Kr,Kh), wherein
the at least one mobile camera unit (KI,Kr,Kh) is configured for arrangement on a respective side wall (WI,Wr,Wh) of the vehicle (1) and for capturing a respective camera field of view (VI,Vr,Vh), and
the camera system (2) is configured to capture geometric parameters (P) of the respective side wall (WI,Wr,Wh) in the camera field of view (VI,Vr,Vh) of the camera unit (KI,Kr,Kh),
to capture an orientation (OKI,OKr,OKh) of the at least one mobile camera unit (KI,Kr,Kh) in a specified vehicle coordinate system (R), to generate a local geometric model (MI,Mr,Mh) of the vehicle (1) of the at least one mobile camera unit (KI,Kr,Kh) depending on the geometric parameters (P) of the respective side wall (WI,Wr,Wh) and the orientation (OKI,OKr,OKh) of the at least one mobile camera unit (KI,Kr,Kh) in the specified vehicle coordinate system (R),
wherein a specified global geometric a-priori model (MAP) of the vehicle (1) is stored in the camera system (2), which model comprises assumptions with respect to the geometric parameters (P) of the vehicle (1),
**characterised in that**
the camera system (2) is configured to combine the specified global geometric a-priori model (MAP) of the vehicle (1) with the local geometric model (MI,Mr,Mh) of the vehicle (1) of the at least one mobile camera unit (KI,Kr,Kh) and at least one further local geometric model (MI,Mr,Mh) of the vehicle (1) to form a global model (M) of the vehicle (1), and
to determine a location (PKI,PKr,PKh) of the at least one mobile camera unit (KI,Kr,Kh) in the global model of the vehicle (1).

2. The camera system (2) as claimed in claim 1, wherein the camera system (2) is configured to check the plausibility of respective captured data (D) of the at least two camera units (KI,Kr,Kh) and/or geometric parameters (P) of the at least two camera units (Kl,Kr,Kh).

3. The camera system (2) as claimed in claim 1 or 2, wherein the camera system (2) is configured to capture the geometric parameters (P) of the respective side wall (WI,Wr,Wh) in the camera field of view (VI,Vr,Vh) of the camera unit (KI,Kr,Kh) according to a static detection method.

4. The camera system (2) as claimed in any one of the preceding claims, wherein the camera system (2) is configured to capture the geometric parameters (P) of the respective side wall (WI,Wr,Wh) in the camera field of view (VI,Vr,Vh) of the camera unit (KI,Kr,Kh) according to a dynamic detection method, wherein the dynamic detection method comprises capturing an optical flow progression (FI,Fr,Fh).

5. The camera system (2) as claimed in claim 4, wherein the camera system (2) is configured to determine an alignment of the at least one camera unit (KI,Kr,Kh) in the global model (M) depending on the flow progression (FI,Fr,Fh).

6. The camera system (2) as claimed in any one of the preceding claims, wherein the at least one camera unit (KI,Kr,Kh) comprises an acceleration sensor (B) which is configured to determine a gravitational direction (G) with respect to the at least one camera unit (KI,Kr,Kh), and the camera system (2) is configured to determine a location (PKI,PKr,PKh) of the global camera system (2) with respect to an environment from the at least one gravitational direction (G).

7. The camera system (2) as claimed in any one of the preceding claims, wherein the camera system (2) is configured to determine the orientation (Ol,Or,Oh ) of the at least one camera unit (KI,Kr,Kh) depending on an order of arrangement.

8. The camera system (2) as claimed in any one of the preceding claims, wherein the camera system (2) has at least one camera unit (KI,Kr,Kh) that is permanently arranged on the vehicle (1).

9. The camera system (2) as claimed in any one of the preceding claims, wherein the camera system (2) is configured to capture an arrangement of the at least one camera unit (KI,Kr,Kh) by capturing a predetermined movement by means of the acceleration sensor (B) of the at least one camera unit (Kl,Kr,Kh).

10. The camera system (2) as claimed in any one of the preceding claims, wherein the camera system (2) is configured to merge camera images (PI,Pr,Ph) of the camera fields of view (VI,Vr,Vh) of the respective camera units (KI,Kr,Kh) according to a predetermined merging method.

11. A vehicle (1), comprising a camera system (2) as claimed in any one of claims 1 to 10.

12. A method for operating a camera system (2) for a vehicle (1), wherein the camera system (2) comprises at least one computing unit (3) having a processor and at least one mobile camera unit (KI,Kr,Kh), wherein the at least one mobile camera unit (KI,Kr,Kh) is configured for arrangement on a respective side wall (WI,Wr,Wh) of the vehicle (1) and for capturing a respective camera field of view (VI,Vr,Vh), the method comprising the steps of:
detecting geometric parameters (P) of the respective side wall (WI,Wr,Wh) in the camera field of view (VI,Vr,Vh) of the camera unit (KI,Kr,Kh) by the camera system (2);
detecting an orientation (OKI,OKr,OKh) of the at least one mobile camera unit (KI,Kr,Kh) in a specified vehicle coordinate system (R) by the camera system (2), generating a local geometric model (MI,Mr,Mh) of the vehicle (1) of the at least one mobile camera unit (KI,Kr,Kh) depending on the geometric parameters (P) of the respective side wall (WI,Wr,Wh) and the orientation (OKI,OKr,OKh) of the at least one mobile camera unit (Kl,Kr,Kh);
combining a specified global geometric a-priori model (MAP) of the vehicle (1), which comprises assumptions with respect to the geometric parameters (P) of the vehicle (1), with the local geometric model (MI,Mr,Mh) of the vehicle (1) of the at least one mobile camera unit (KI,Kr,Kh) and at least one further local geometric model (MI,Mr,Mh) of the vehicle (1) to form a global model of the vehicle (1) by the camera system (2); and
determining a location (PKI,PKr,PKh) of the at least one mobile camera unit (KI,Kr,Kh) in the global model (M) of the vehicle (1) by the camera system (2).

## Revendications

1. Système de caméra (2) pour un véhicule (1), comprenant au moins une unité de calcul (3), présentant un processeur, et au moins une unité de caméra mobile (Kl, Kr, Kh), dans lequel
l'au moins une unité de caméra mobile (Kl, Kr, Kh) est configurée pour être disposée sur une paroi latérale respective (WI, Wr, Wh) du véhicule (1) et pour capturer un champ de vision de caméra respectif (VI, Vr, Vh), et
le système de caméra (2) est configuré pour capturer, dans le champ de vision de caméra (VI, Vr, Vh) de l'unité de caméra (Kl, Kr, Kh), des paramètres géométriques (P) de la paroi latérale respective (WI, Wr, Wh),
pour capturer une orientation (OKI, OKr, OKh) de l'au moins une unité de caméra mobile (Kl, Kr, Kh) dans un système de coordonnées véhicule prédéfini (R), et, en fonction des paramètres géométriques (P) de la paroi latérale respective (WI, Wr, Wh) et de l'orientation (OKI, OKr, OKh) de l'au moins une unité de caméra mobile (Kl, Kr, Kh) dans le système prédéfini de coordonnées de véhicule (R), pour générer un modèle géométrique local (MI, Mr, Mh) du véhicule (1) de l'au moins une unité de caméra mobile (Kl, Kr, Kh),
dans lequel un modèle géométrique global a priori prédéfini (MAP) du véhicule (1) est stocké dans le système de caméra (2), lequel comprend des hypothèses concernant les paramètres géométriques (P) du véhicule (1),
**caractérisé en ce que**
le système de caméra (2) est configuré pour réunir le modèle géométrique global a priori prédéfini (MAP) du véhicule (1) avec le modèle géométrique local (MI, Mr, Mh) du véhicule (1) de l'au moins une unité de caméra mobile (Kl, Kr, Kh) ainsi qu'avec au moins un autre modèle géométrique local (MI, Mr, Mh) du véhicule (1), afin d'obtenir un modèle global (M) du véhicule (1), et
pour déterminer une position (PKI, PKr, PKh) de l'au moins une unité de caméra mobile (Kl, Kr, Kh) dans le modèle global du véhicule (1).

2. Système de caméra (2) selon la revendication 1, dans lequel le système de caméra (2) est configuré pour vérifier la plausibilité des données de capture respectives (D) des au moins deux unités de caméra (Kl, Kr, Kh) et/ou des paramètres géométriques (P) des au moins deux unités de caméra (Kl, Kr, Kh).

3. Système de caméra (2) selon la revendication 1 ou 2, dans lequel le système de caméra (2) est configuré pour capturer les paramètres géométriques (P) de la paroi latérale respective (WI, Wr, Wh) dans le champ de vision de caméra (VI, Vr, Vh) de l'unité de caméra (Kl, Kr, Kh), selon un procédé de détection statique.

4. Système de caméra (2) selon l'une quelconque des revendications précédentes, dans lequel le système de caméra (2) est configuré pour capturer les paramètres géométriques (P) de la paroi latérale respective (WI, Wr, Wh) dans le champ de vision de caméra (VI, Vr, Vh) de l'unité de caméra (Kl, Kr, Kh), selon un procédé de détection dynamique, dans lequel le procédé de détection dynamique comprend la capture d'un flux optique (FI, Fr, Fh).

5. Système de caméra (2) selon la revendication 4, dans lequel le système de caméra (2) est configuré pour déterminer une orientation de l'au moins une unité de caméra (Kl, Kr, Kh) dans le modèle global (M) en fonction du flux optique (FI, Fr, Fh).

6. Système de caméra (2) selon l'une quelconque des revendications précédentes, dans lequel l'au moins une unité de caméra (Kl, Kr, Kh) comprend un capteur d'accélération (B), configuré pour déterminer une direction de gravité (G) par rapport à l'au moins une unité de caméra (Kl, Kr, Kh), et le système de caméra (2) est configuré pour déterminer, à partir de l'au moins une direction de gravité (G), une position (PKI, PKr, PKh) du système de caméra global (2) par rapport à un environnement.

7. Système de caméra (2) selon l'une quelconque des revendications précédentes, dans lequel le système de caméra (2) est configuré pour déterminer l'orientation (Ol, Or, Oh) de l'au moins une unité de caméra (Kl, Kr, Kh) en fonction d'un ordre de disposition.

8. Système de caméra (2) selon l'une quelconque des revendications précédentes, dans lequel le système de caméra (2) présente au moins une unité de caméra (Kl, Kr, Kh) disposée de manière fixe sur le véhicule (1).

9. Système de caméra (2) selon l'une quelconque des revendications précédentes, dans lequel le système de caméra (2) est configuré pour capturer une disposition de l'au moins une unité de caméra (Kl, Kr, Kh) par une capture d'un mouvement prédéterminé à l'aide du capteur d'accélération (B) de l'au moins une unité de caméra (Kl, Kr, Kh).

10. Système de caméra (2) selon l'une quelconque des revendications précédentes, dans lequel le système de caméra (2) est configuré pour fusionner les images de caméra (PI, Pr, Ph) des champs de vision (VI, Vr, Vh) des unités de caméra respectives (Kl, Kr, Kh) selon un procédé de fusion prédéterminé.

11. Véhicule (1), comprenant un système de caméra (2) selon l'une quelconque des revendications 1 à 10.

12. Procédé de fonctionnement d'un système de caméra (2) pour un véhicule (1), dans laquelle le système de caméra (2) comprend au moins une unité de calcul (3) présentant un processeur et au moins une unité de caméra mobile (Kl, Kr, Kh), dans lequel l'au moins une unité de caméra mobile (Kl, Kr, Kh) est configurée pour être disposée sur une paroi latérale respective (WI, Wr, Wh) du véhicule (1) et pour capturer un champ de vision de caméra respectif (VI, Vr, Vh), comprenant les étapes suivantes :
la capture de paramètres géométriques (P) de la paroi latérale respective (WI, Wr, Wh) dans le champ de vision de caméra (VI, Vr, Vh) de l'unité de caméra (Kl, Kr, Kh) par le système de caméra (2) ;
la capture d'une orientation (OKI, OKr, OKh) de l'au moins une unité de caméra mobile (Kl, Kr, Kh) dans un système de coordonnées de véhicule prédéfini (R) par le système de caméra (2),
la génération d'un modèle géométrique local (MI, Mr, Mh) du véhicule (1) de l'au moins une unité de caméra mobile (Kl, Kr, Kh) en fonction des paramètres géométriques (P) de la paroi latérale respective (WI, Wr, Wh) et de l'orientation (OKI, OKr, OKh) de l'au moins une unité de caméra mobile (Kl, Kr, Kh) ;
la fusion d'un modèle géométrique global a priori prédéfini (MAP) du véhicule (1), lequel comprend des hypothèses concernant les paramètres géométriques (P) du véhicule (1), avec le modèle géométrique local (MI, Mr, Mh) du véhicule (1) de l'au moins une unité de caméra mobile (Kl, Kr, Kh) et au moins un autre modèle géométrique local (MI, Mr, Mh) du véhicule (1), afin d'obtenir un modèle global du véhicule (1) par le système de caméra (2) ; et
la détermination d'une position (PKI, PKr, PKh) de l'au moins une unité de caméra mobile (Kl, Kr, Kh) dans le modèle global (M) du véhicule (1) par le système de caméra (2).
